# EUROPEAN PATENT APPLICATION

(11) **EP 4 552 931 A1**
(43) Date of publication of application: **14.05.2025**
(21) Application number: 23835440.1
(22) Date of filing: 30.06.2023
(51) Int. Cl.: B60R 19/04, B60R 19/03, F16B 5/08

(54) **METHOD FOR MANUFACTURING AUTOMOBILE STRUCTURAL MATERIAL**

(30) Priority: 08.07.2022 JP 2022110826
(71) Applicant: Resonac Corporation, Tokyo 105-7325 (JP)
(72) Inventor: TAKAHASHI, Nobuyuki, Tokyo 105-8518 (JP); SATO, Masahiro, Tokyo 105-8518 (JP); MORI, Masatoshi, Tokyo 105-8518 (JP)
(74) Representative: Strehl & Partner mbB
(86) International application number: PCT/JP2023/024421
(87) International publication number: WO 2024/009908

(57) **Abstract**

This method for manufacturing an automobile structural material according to an embodiment comprises: a pre-bonding step for preparing a laminate in which a first metal member, a solid bonding agent having, as a main component, an amorphous thermoplastic resin that is at least one among a thermoplastic epoxy resin and a phenoxy resin, and a second metal member are arranged in this order; and a bonding step for melting the solid bonding agent by heating and pressing the laminate, and bonding the first metal member and the second metal member, wherein the Young's modulus of the second metal member is at least 5 GPa higher than that of the first metal member.

## Description

### Technical Field

The present disclosure relates to a method for manufacturing an automobile structural material.

### Background Art

Structural members and reinforcing members of an automobile, for example, panels (outer panels and inner panels such as a hood, doors, and a roof), a bumper reinforcement (bumper R/F), door beams and the like are required to be of reduced weight in order to improve fuel consumption while simultaneously ensuring safety against collision.

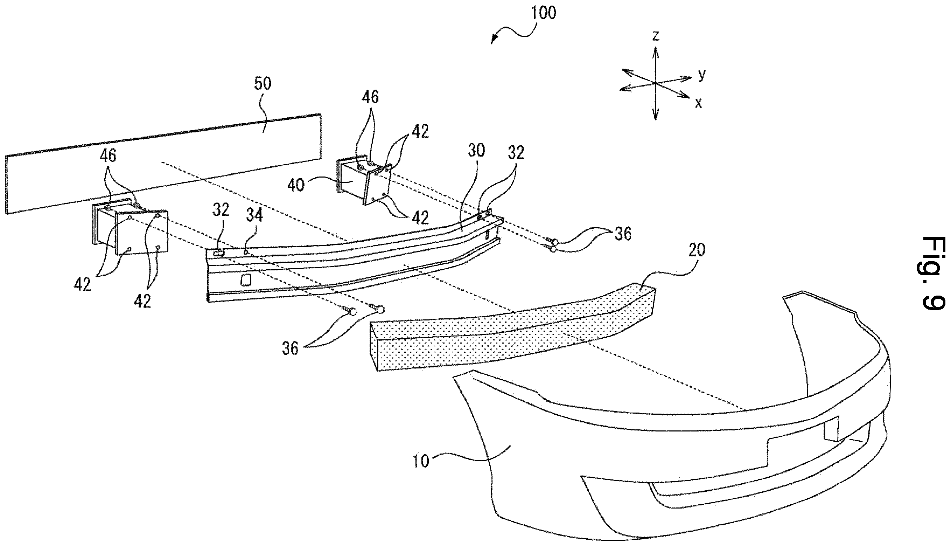

For example, a bumper structure including a bumper reinforcement is attached to each of a front portion and a rear portion of an automobile to protect a vehicle body and an occupant space by absorbing energy at the time of collision from the outside. As illustrated in Fig. 9, the bumper structure generally includes a bumper fascia 10, an energy absorber 20, a bumper reinforcement 30, crash boxes 40, and a vehicle body fixing member 50 in this order from the outside.

Patent Literature 1 (JP 2011-20471 A) describes "a vehicle structural member having a closed traverse cross-sectional shape and including a hat member that has a substantial hat form including two wall portions facing each other, two bottom corner portions formed continuously at one end point of each of the two wall portions, and a bottom portion connecting the two bottom corner portions, that has a long length, and that absorbs a collision energy by generating bending deformation in receiving an impact load in a direction substantially parallel to the traverse cross-sectional shape, wherein the hat member includes a first member constituting at least a part of the bottom portion and a plurality of second members constituting the wall portion and having a plate thickness larger than a plate thickness of the first member, each of two end portions of the first member in a width direction overlaps one end portion, in a width direction, of each of the plurality of second members, and a weld portion that extends in a longitudinal direction of the hat member and that joins the first member and the second member to each other at the overlapping portion of the first member and each of the second members, and also discloses that the vehicle structural member is a bumper reinforcement".

Patent Literature 2 (JP 2007-284039 A) describes "a bumper structure including a bumper reinforcement constituted by a metal profile with a hollow cross section, and a bumper stay having a tubular shape, made of an aluminum alloy, and fixed to both end portions of the bumper reinforcement, wherein the bumper reinforcement has an outline including a front wall, a rear wall, and upper and lower walls connecting the front wall and the rear wall, and is formed with holes penetrating through the front wall and the rear wall at the both end portions, the bumper stay has an axial direction along a front-rear direction of a vehicle body, and includes a shaft portion fitted in the holes of the bumper reinforcement, and the shaft portion is expanded by electromagnetic forming to be in close contact with inner peripheral surfaces of the holes and to protrude in an outer diameter direction between the front wall and the rear wall, cross-sectional structures of the upper and lower walls are designed to be bent toward an inner side of the hollow when buckled by a compressive load in the front-rear direction, an outer peripheral surface of the protruding shaft portion of the bumper stay faces inner surfaces of the upper and lower walls, and the upper and lower walls are in contact with the shaft portion when buckled".

Patent Literature 3 (JP 2011-161466 A) describes "when steel plates 10 and 11 layered on a rear surface of a rear surface side flange 4 of an aluminum-alloy hollow profile 2 having a cross-sectional shape having double aligned rectangles provided with an intermediate rib in a rectangular cross section are welded together at three positions, that is, both end portion sides 4b and 4c of the rear surface side flange 4 and a center portion side 4a with which the intermediate rib 7 of the rear surface side flange 4 intersects, a rear surface region of the center portion side 4a is previously formed into a protruding shape 8, the two steel plates are layered such that the protruding portion 8 is interposed and protrudes between the steel plates, and arc welding is performed by FCW in this state".

Patent Literature 4 (JP 2018-161946 A) describes "a vehicle structure including a first member having a tubular shape and having a projection on an outer periphery thereof and a second member having a tubular shape and including a lock wall formed with a hole portion into which the first member can be inserted, wherein the first member is joined to the second member by expanding an insertion portion of the second member into the hole portion, and the projection abuts against the lock wall of the second member".

### Citation List

### Patent Literature

PTL 1: JP 2011-20471 A
PTL 2: JP 2007-284039 A
PTL 3: JP 2011-161466 A
PTL 4: JP 2018-161946 A

### Summary of Invention

### Technical Problem

From the viewpoint of improving collision safety, fuel consumption, and traveling stability, it is always and strongly desired that structural members and reinforcing members of automobiles are reduced in weight while ensuring mechanical properties such as strength, rigidity, and impact absorption.

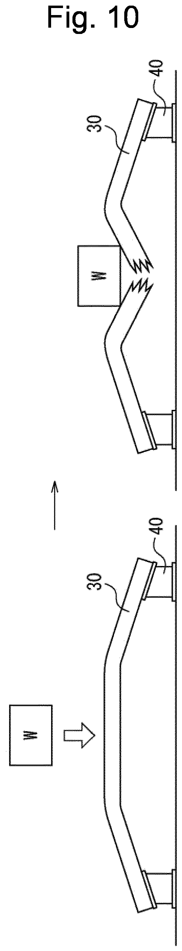

For example, regarding a load at the time of collision, a bumper reinforcement disposed at each of front and rear portions of an automobile is required to have high rigidity against a light load and to be plastically deformed against a heavy load to absorb energy to a high degree. As illustrated in Fig. 10, when a heavy load W is applied, if a bumper reinforcement 30 is not plastically deformed and is broken or plastically deformed too much, crash boxes 40 disposed on the vehicle body side are not crushed, so that the crash boxes 40 cannot absorb an impact energy. As a result, a bumper structure cannot efficiently absorb the energy at the time of collision from the outside, and thus, there is a possibility that a vehicle body and an occupant space cannot be sufficiently protected.

As illustrated in Fig. 9, the bumper reinforcement 30 is an elongated member extending along a vehicle width direction (±y direction in Fig. 9), and is generally formed using a metal material such as aluminum or iron. The bumper reinforcement made of metal has a hollow structure to reduce its weight. However, the bumper reinforcement of a hollow structure having a cross-sectional shape for exhibiting the above-described performance is not sufficiently reduced in weight.

It has been studied to achieve both improvement in mechanical properties such as strength and rigidity and reduction in weight by multi-materialization including incorporation of a different metal material into a part of a structure in structural members and reinforcing members of an automobile that are made of metal. As an example of the multi-materialization, for example, a combination of a steel material and an aluminum alloy is known as described in Patent Literature 3 and Patent Literature 4.

In the multi-materialization, members containing different kinds of metals or alloys are fastened to each other by using a mechanical joining technique such as fastening by using bolts and nuts, screwing, or caulking, welded by arc welding or the like, or bonded to each other by using an adhesive such as a thermosetting epoxy resin-based adhesive in liquid or at a B-stage, or a hot melt adhesive containing a thermoplastic resin.

Since fastening using a mechanical joining technique is locally performed, it is difficult to obtain a uniform bonding strength throughout the structural members or reinforcing members. In the welding, a brittle intermetallic compound may be formed at a joining portion, which makes it difficult to obtain a high joining strength. When two metals having different ionization tendencies come into contact with each other in the fastening and welding, electrolytic corrosion (also referred to as galvanic corrosion) may occur and one of the metals may be corroded.

The thermosetting epoxy resin-based adhesive has a long joining process time or a short open time regardless of whether it is in a liquid state or in a B-stage state. The hot melt adhesive having a short joining process time and a long open time cannot stably provide a high adhesive force. In addition, since these adhesives, in particular, the thermosetting epoxy resin-based adhesive, exhibit high fluidity during the joining process, it is difficult to join members containing different kinds of metals or alloys in a state in which the members are reliably separated from each other, and thus, electrolytic corrosion is insufficiently prevented.

In the present disclosure, the joining process time means a time from a start point to an end point, the start point being a time when a joining agent first comes into contact with one or both of base materials constituting a joined body, and the end point being a time when the preparation of the joined body is completed. For example, the joining process time includes a time required for application and drying of a liquid adhesive or placement of a solid joining agent, and a time required for bonding the base materials to each other (e.g., curing an adhesive layer). The shorter the joining process time, the higher the productivity of the joined body.

In the present disclosure, the open time means a time limit from when the joining agent is applied or placed on one of the base materials (e.g., a first metal member) to when placement of the other base material (e.g., a second metal member) is completed. Within the open time, the adhesive force of the joining agent is not decreased, and these base materials can be bonded to each other with a sufficient adhesive force. The longer the open time is, the higher the flexibility in the manufacturing process of the joined body becomes.

It is an object of the present disclosure to provide a method for manufacturing an automobile structural material, which is capable of joining different kinds of metal members with high joining strength, suppressing electrolytic corrosion between the different kinds of metal members, and achieving a short joining process time and a long open time.

### Solution to Problem

The present disclosure includes the following aspects.

[1] A method for manufacturing an automobile structural material, the method including:
   a pre-joining process of preparing a layered body in a state in which a first metal member, a solid joining agent containing, as a main component, an amorphous thermoplastic resin that is at least one selected from the group consisting of thermoplastic epoxy resins and phenoxy resins,
   and a second metal member to be joined to the first metal member are arranged in this order; and a joining process of heating and pressurizing the layered body, melting the solid joining agent, thereby joining the first metal member and the second metal member,
   wherein a Young's modulus of the second metal member is higher than a Young's modulus of the first metal member by a value equal to or more than 5 GPa.
[2] The method for manufacturing the automobile structural material according to aspect [1], wherein an epoxy equivalent of the amorphous thermoplastic resin is equal to or more than 1600, or the amorphous thermoplastic resin does not contain an epoxy group, and a heat of fusion of the amorphous thermoplastic resin is equal to or less than 15 *J*/*g.*
[3] The method for manufacturing the automobile structural material according to aspect [1] or [2], wherein the heating and the pressurizing are performed under conditions of 100°C to 400°C and 0.01 MPa to 20 MPa.
[4] The method for manufacturing the automobile structural material according to any one of aspects [1] to [3], wherein the solid joining agent before the melting has a shape selected from the group consisting of a film, a rod, a pellet, and powder.
[5] The method for manufacturing the automobile structural material according to any one of aspects [1] to [4], wherein
   the automobile structural material is a bumper reinforcement,
   the first metal member is a main body extending along a vehicle width direction and including at least one first joining portion,
   the second metal member is a metal reinforcing portion extending along the vehicle width direction and including at least one second joining portion, and
   the first joining portion of the main body and the second joining portion of the metal reinforcing portion are joined to each other through the solid joining agent.
[6] The method for manufacturing the automobile structural material according to aspect [5], wherein the metal reinforcing portion is disposed closer to a vehicle body side relative to the main body.
[7] The method for manufacturing the automobile structural material according to aspect [5] or [6], wherein the main body has an open cross section, and the first joining portion of the main body and the second joining portion of the metal reinforcing portion are joined to each other and thus form a hollow portion inside the main body.
[8] The method for manufacturing the automobile structural material according to any one of aspect [5] to [7], wherein a cross-sectional shape of the main body is a hat form.
[9] The method for manufacturing the automobile structural material according to any one of aspects [5] to [8], wherein the metal reinforcing portion includes one or more holes.
[10] The method for manufacturing the automobile structural material according to any one of aspects [5] to [9], wherein a material of the main body is an aluminum alloy having a tensile strength of 350 MPa or more.
[11] The method for manufacturing the automobile structural material according to any one of aspects [5] to [10], wherein a material of the metal reinforcing portion is a metal material selected from the group consisting of iron, steel, an Al-Si-based aluminum alloy, and an Al-Zn-based aluminum alloy.
[12] The method for manufacturing the automobile structural material according to any one of aspects [5] to [11], wherein
   the main body includes the first joining portion on each of upper and lower sides of the main body,
   the metal reinforcing portion includes
   a reinforcing portion main body extending in the vehicle width direction, and the second joining portion on each of upper and lower sides of the reinforcing portion main body, and
   the first joining portion and the second joining portion are joined to each other at a joint surface that intersects a vehicle front-rear direction.

### Advantageous Effects of Invention

According to the manufacturing method of the present disclosure, an automobile structural material can be manufactured in a short joining process time and a long open time, and different kinds of metal members of the automobile structural material can be joined to each other with high joining strength, suppressing electrolytic corrosion between the metal members.

### Brief Description of Drawings

[Fig. 1] Fig. 1 is a schematic perspective view of a bumper reinforcement according to an embodiment.
[Fig. 2] Fig. 2 is a schematic perspective view of a main body according to an embodiment.
[Fig. 3] Fig. 3 is a schematic perspective view of a metal reinforcing portion according to an embodiment.
[Fig. 4] Fig. 4 is a cross-sectional view taken along line A-A of Fig. 1.
[Fig. 5] Fig. 5 is a cross-sectional view relating to dimensions of a main body 200 and a metal reinforcing portion 300 according to an embodiment.
[Fig. 6] Fig. 6 is a cross-sectional view of a bumper reinforcement according to another embodiment.
[Fig. 7] Fig. 7 is a cross-sectional view relating to dimensions of a main body 500 and a metal reinforcing portion 600 according to still another embodiment.
[Fig. 8] Fig. 8 is a schematic view of an evaluation apparatus in a three-point bending test.
[Fig. 9] Fig. 9 is a schematic perspective view illustrating a bumper structure of a vehicle.
[Fig. 10] Fig. 10 is a schematic view when an impact load is applied to a bumper reinforcement that is disposed on crash boxes and that is easily broken.
[Fig. 11] Fig. 11 is a schematic view when an impact load is applied to a bumper reinforcement of an embodiment disposed on crash boxes.
[Fig. 12] Fig. 12 is a schematic cross-sectional view of a state in which a first metal member and a second metal member are joined to each other through an adhesive layer containing a solid joining agent.

### Description of Embodiments

Hereinafter, embodiments of the present disclosure will be described in detail with reference to the drawings. The present disclosure is not limited to the following embodiments, and can be variously modified within the scope of the present invention.

In the present disclosure, when numeral values are described by using a range, the numerical values at both ends of the range are an upper limit value and a lower limit value, and are included within the range.

In the present disclosure, a "front direction of a vehicle" and a "rear direction of a vehicle" refer to an x direction and a -x direction in Fig. 9, an "upper direction of a vehicle" and a "lower direction of a vehicle" refer to a z direction and a -z direction in Fig. 9, and a "width direction of a vehicle" refers to ±y directions in Fig. 9. In the present disclosure, a "vehicle" refers to an entire automobile, and a "vehicle body" refers to a portion that is located more inside the vehicle relative to a bumper structure and on which an occupant or luggage is placed. In the following description, unless otherwise specified, for example, in a case where an up-down direction, a front-rear direction, and a width direction are used, they mean the up-down direction of the vehicle, the front-rear direction of the vehicle, and the width direction of the vehicle, respectively.

In the present disclosure, joining means connecting objects to each other, and adhesion and welding are subordinate concepts thereof. Adhesion means that two adherends (objects to be adhered) are brought into a joined state via an organic material (curable resin, thermoplastic resin, or the like) such as a tape or an adhesive. Welding means that a surface of a thermoplastic resin or the like as an adherend is melted by heat and brought into a joined state by entanglement and crystallization due to molecular diffusion by contact pressurization and cooling.

In the present disclosure, a "Young's modulus" means a value to be measured for a certain material in accordance with JIS Z 2241:2021 "Metallic Materials-Tensile Testing-Method". When anisotropy is exhibited in the Young's modulus, the lowest value is defined as the Young's modulus of a material.

### Automobile Structural Material

Examples of the automobile structural material of the present disclosure include, but are not limited to, outer panels and inner panels such as a hood, doors, and a roof; a bumper reinforcement; door beams; side sills; a battery pack case; and B-pillars.

In order to present an exemplary method for manufacturing an automobile structural material, a method for manufacturing a bumper reinforcement will now be described in detail.

### Bumper Reinforcement

An automobile includes a bumper structure at each of front and rear portions of the vehicle. As illustrated in Fig. 9, a bumper structure 100 typically includes the bumper fascia 10, the energy absorber 20, the bumper reinforcement 30, the crash boxes 40, and the vehicle body fixing member 50 in this order from the front or rear portion of the vehicle. The bumper reinforcement 30 includes elongated holes 32 at each of ends thereof and a positioning hole 34. The crash box 40 includes round holes 42 for fixing the bumper reinforcement 30. The bumper reinforcement 30 and the crash boxes 40 are fastened by bolts 36 and nuts 46. In Fig. 9, for the purpose of visibility and simplification of the drawing, the elongated hole and the positioning hole on the lower side of the bumper reinforcement 30, the bolts passing through the elongated hole and the positioning hole, and the nuts paired with the bolts are not illustrated. The crash box 40 is attached to the vehicle body fixing member 50 with screws or bolts and nuts (not illustrated). The crash box 40 may be welded and integrated with the vehicle body fixing member 50. These members have different degrees of rigidity and have an ability to absorb energy at the time of collision from the outside. To efficiently absorb an impact energy, it is ideal that the bumper structure is configured to be plastically deformed or broken in the order from a member positioned outside the vehicle when the bumper structure receives a collision energy from the outside.

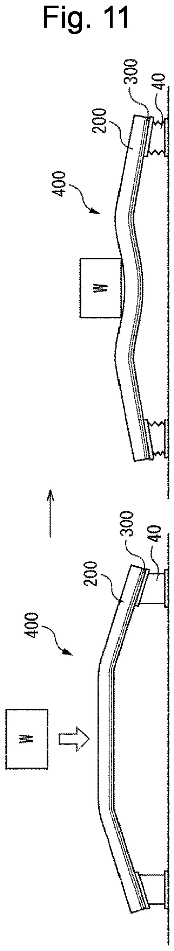

For example, as illustrated in Fig. 10, in a case where the bumper reinforcement 30 that is easily broken or excessively plastically deformed due to weight reduction is disposed in the bumper structure, when a heavy load W is applied, the crash boxes 40 are not easily crushed and thus it is impossible to efficiently absorb an impact energy. On the other hand, in a bumper reinforcement 400 of the present disclosure, a metal reinforcing portion containing a metal material whose Young's modulus is higher than that of a metal material of a main body by a value equal to or more than 5 GPa is joined to the main body constituting the bumper reinforcement 400. As a result, as illustrated in Fig. 11, when the bumper reinforcement 400 of the present disclosure receives a heavy load W, the bumper reinforcement 400 is plastically deformed without causing a problem such as breakage while transmitting the impact energy to the crash boxes 40 to deform the crash boxes 40, and thus the bumper structure including the bumper reinforcement 400 can efficiently absorb the impact energy.

A mass per unit length (g/m) of the bumper reinforcement can be less than 2700 g/m, 2650 g/m or less, or 2600 g/m or less. The lower limit of the mass per unit length is not particularly limited, and can be, for example, 2000 g/m or more, 2100 g/m or more, or 2200 g/m or more. In an embodiment, the mass per unit length (g/m) of the bumper reinforcement can be equal to or more than 2000 g/m and less than 2700 g/m, 2100 g/m to 2650 g/m, or 2200 g/m to 2600 g/m. The mass per unit length is an index of the weight reduction of the bumper reinforcement. In a case where the bumper reinforcement is bent, for example, the unit length of the bumper reinforcement means a length along a direction in which the bumper reinforcement extends.

A residual strain amount of the bumper reinforcement can be 0.45% or less, 0.43% or less, or 0.40% or less, and can be 0.20% or more, 0.25% or more, or 0.30% or more under conditions of a temperature of 25°C, a load of 5 t, and a displacement rate of 1 mm/min. In an embodiment, the residual strain amount of the bumper reinforcement is 0.20% to 0.45%, 0.25% to 0.43%, or 0.30% to 0.40%. The residual strain amount is an index of whether or not the bumper reinforcement exhibits appropriate rigidity and plastic deformation.

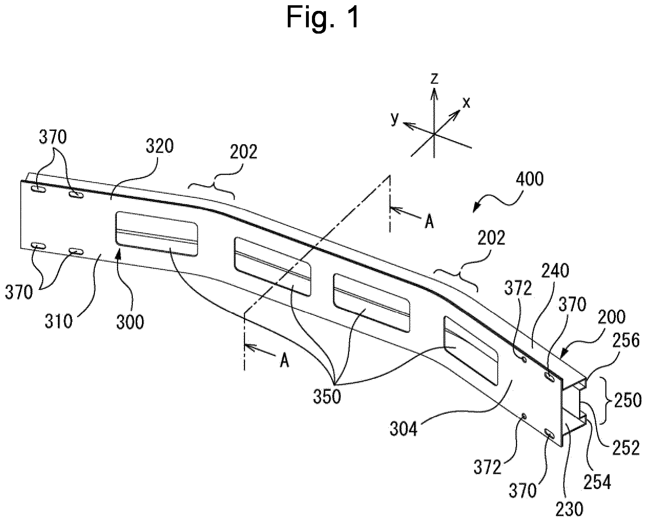

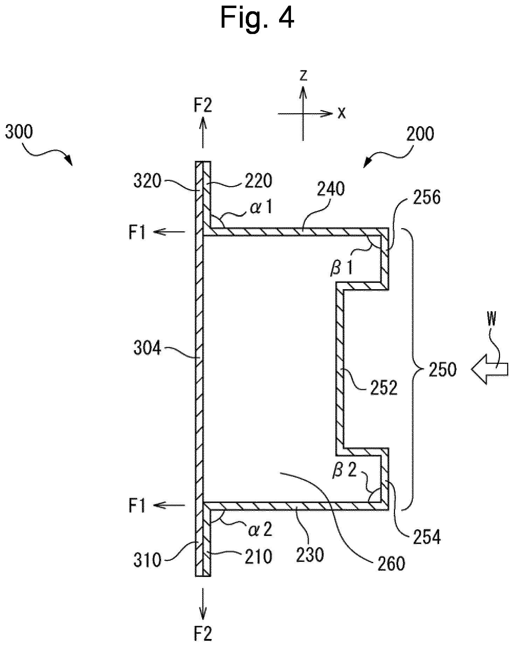

Fig. 1 is a schematic perspective view of the bumper reinforcement according to an embodiment, and Fig. 4 is a cross-sectional view taken along line A-A in Fig. 1. The bumper reinforcement 400 includes a main body 200 extending along a vehicle width direction and a metal reinforcing portion 300 extending along the vehicle width direction. When the bumper reinforcement 400 is incorporated into the bumper structure, the metal reinforcing portion 300 may be disposed closer to the vehicle body side relative to the main body 200, or the main body 200 may be disposed closer to the vehicle body side relative to the metal reinforcing portion 300. The bumper reinforcement 400 of the embodiment of Fig. 1 includes a bent portion according to the design of the bumper, wherein the metal reinforcing portion 300 is disposed closer to the vehicle body side relative to the main body 200. By disposing the metal reinforcing portion 300 closer to the vehicle body side relative to the main body 200, plastic deformation of the main body 200 is further promoted at the time of collision, and a collision energy can be effectively absorbed.

Hereinafter, the main body 200 and the metal reinforcing portion 300 constituting the bumper reinforcement will be described in order. For ease of understanding, the bumper reinforcement described herein refers to a bumper reinforcement mounted on a bumper structure (front bumper) at a front portion of the vehicle, but the bumper reinforcement of the present disclosure can also be mounted on a bumper structure (rear bumper) at a rear portion of the vehicle. In a case where the bumper reinforcement of the present disclosure is employed in the rear bumper, a "front surface portion" in the following description can be read as a "rear surface portion".

A length of the metal reinforcing portion 300 in the vehicle width direction can be 50% or more, 55% or more, 60% or more, 65% or more, 70% or more, 75% or more, or 85% or more, and 100% or less, 95% or less, 90% or less, 85% or less, 80% or less, or 75% or less of a length of the main body 200 in the vehicle width direction.

### Main Body

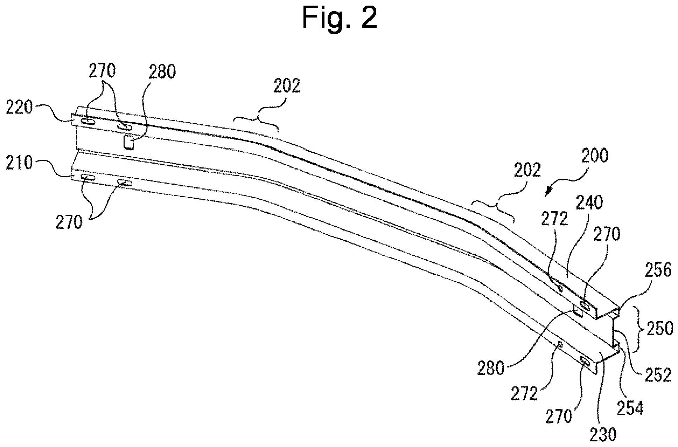

The main body of an embodiment is illustrated in Fig. 2. The main body 200 extends along the vehicle width direction and includes a lower first joining portion 210 and an upper first joining portion 220. The main body 200 is gently bent at a bent portion 202 by, for example, bending according to the design of a bumper. As a result, left and right end portions of the main body 200 are positioned further rearward in the front-rear direction of the vehicle relative to a central portion of the main body 200. In a case of the rear bumper, the left and right end portions of the main body 200 are positioned further forward in the front-rear direction of the vehicle relative to the central portion of the main body 200.

Although the main body 200 is illustrated in Fig. 2 as including the bent portion 202, the main body 200 may have a linear shape.

On left and right end portions of the lower first joining portion 210 and the upper first joining portion 220, there are provided elongated holes 270 and positioning holes 272 for attaching the bumper reinforcement 400 to the crash boxes 40 with fasteners such as bolts and nuts, or screws. If necessary, the fasteners may be subjected to coating for preventing electrolytic corrosion, surface treatment, or the like. In order to prevent the bumper reinforcement 400 and the crash box 40 from coming into direct contact with each other, a resin film may be interposed between the bumper reinforcement 400 and the crash box 40 in attaching the bumper reinforcement 400. In addition to such holes, for example, a hole for weight reduction, a relief hole for relieving deformation stress caused by bending, and a hole for inserting a wrench tool for bolt fastening may be formed in the main body.

The main body 200 includes a lower portion 230, a front surface portion 250, and an upper portion 240 configured to connect the lower first joining portion 210 and the upper first joining portion 220. The front surface portion 250 includes a central recessed portion 252, a lower surface 254, and an upper surface 256, which extend along the width direction of the vehicle. When the central recessed portion 252 is provided, it is possible to increase the rigidity of the main body 200 while reducing the weight of the main body 200.

Openings 280 for attaching or positioning the energy absorber 20 such as a urethane foam or a polypropylene foam are provided at left and right end portions of the front surface portion 250.

The main body 200 has a hollow structure from the viewpoint of weight reduction, and specifically has an open cross section. The main body 200 has a cross section with a form referred to as a hat form. As illustrated in Fig. 2 and Fig. 4, in the present disclosure, a "hat form" refers to a form in which the lower first joining portion 210 and the upper joining portion 220 extend downward and upward from the lower portion 230 and the upper portion 240, respectively, and a side opposite to the front surface portion 250 is opened. The main body 200 illustrated in Fig. 4 can be referred to as a W-hat main body because the main body 200 includes, in particular, the central recessed portion 252 and thus the cross-sectional shape when rotated by 90 degrees to the right is in the form of a W-hat.

The dimension, thickness, and shape of the main body 200 can be appropriately set according to the vehicle (for example, a passenger car, a truck, or the like) to which the bumper reinforcement is attached and required performance (for example, weight reduction, appropriate rigidity, and plastic deformability).

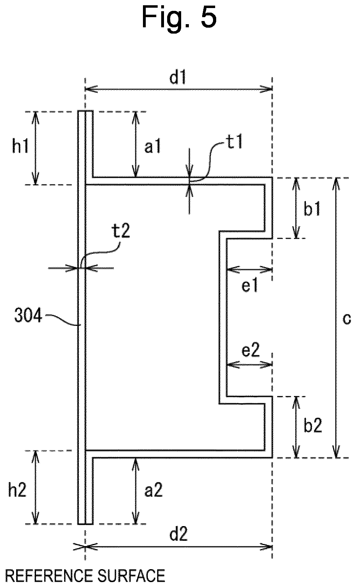

Fig. 5 is a cross-sectional view related to dimensions of the main body 200 and the metal reinforcing portion 300. The following description using Fig. 5 is not limited to the embodiment in which the cross-sectional shape of the main body is as illustrated in Fig. 5.

A width a1 of the upper first joining portion 220 and a width a2 of the lower first joining portion 210 can each independently be 10 mm or more, 15 mm or more, 20 mm or more, or 25 mm or more, and can each independently be 50 mm or less, 45 mm or less, 40 mm or less, or 35 mm or less. The width of the first joining portion can be appropriately set according to a joining force required between the first joining portion and the second joining portion of the metal reinforcing portion to be joined, and the like.

A depth d1 of the upper portion 240 and a depth d2 of the lower portion 230 can each independently be 20 mm or more, 30 mm or more, 40 mm or more, or 50 mm or more, and can be 100 mm or less, 90 mm or less, 80 mm or less, or 70 mm or less. The depths d1 and d2 of the upper portion 240 and the lower portion 230 can be appropriately set according to required rigidity and plastic deformability.

A height c of the front surface portion 250 can be 50 mm or more, 60 mm or more, 80 mm or more, or 100 mm or more, and can be 200 mm or less, 180 mm or less, 160 mm or less, or 150 mm or less. The height c of the front surface portion 250 can be appropriately set according to required rigidity and plastic deformability.

In a case where the main body 200 is a W-hat main body, a height b1 of the upper surface 256 and a height b2 of the lower surface 254 can each independently be 5 mm or more, 10 mm or more, 13 mm or more, or 15 mm or more, and can be 40 mm or less, 35 mm or less, 30 mm or less, or 25 mm or less. A depth e1 from the upper surface 256 to the central recessed portion 252 and a depth e2 from the lower surface 254 to the central recessed portion 252 can each independently be 5 mm or more, 8 mm or more, 10 mm or more, or 13 mm or more, and can be 35 mm or less, 30 mm or less, 25 mm or less, or 20 mm or less. The b1, b2, e1, and e2 can be appropriately set according to required rigidity and plastic deformability.

A thickness t1 of the main body 200 can be 1.0 mm or more, 1.5 mm or more, or 2.0 mm or more, and can be 5.0 mm or less, 4.5 mm or less, or 4.0 mm or less. A thickness of each portion (for example, the first joining portion) constituting the main body can be appropriately set according to required performance such as weight reduction, appropriate rigidity, and plastic deformability. The thickness of the main body 200 may be the same at each portion or may be different at each portion.

An angle α1 formed by the upper portion 240 and the upper first joining portion 220 in the main body 200 illustrated in Fig. 4 can be 75 degrees or more, 80 degrees or more, or 85 degrees or more, and can be 105 degrees or less, 100 degrees or less, or 95 degrees or less. The angle α1 is preferably 90 degrees. This angle can be similarly applied to an angle α2 formed by the lower portion 230 and the lower first joining portion 210.

An angle β1 formed by the upper surface 256 and the upper portion 240 of the front surface portion 250 can be 75 degrees or more, 80 degrees or more, or 85 degrees or more, and can be 105 degrees or less, 100 degrees or less, or 95 degrees or less. The angle β1 is preferably 90 degrees. This angle can also be applied to an angle β2 formed by the lower surface 254 of the front surface portion 250 and the lower portion 230.

Examples of the material of the main body include metal materials and metal alloy materials. Among them, iron, steel, titanium, a titanium alloy, a magnesium alloy, aluminum, and an aluminum alloy are preferable, and an aluminum alloy is more preferable. These materials may be used alone or in combination of two or more.

As the aluminum alloy, an aluminum alloy having a tensile strength of 350 MPa or more, 400 MPa or more, or 450 MPa or more is preferable from the viewpoint of weight reduction, appropriate rigidity, plastic deformability, and the like. The upper limit of the tensile strength of such an alloy is not particularly limited and can be, for example, 600 MPa or less, 550 MPa or less, or 500 MPa or less. Herein, the tensile strength is a value measured using a universal tester (AG-100KNX, available from Shimadzu Corporation) in accordance with JIS Z 2241.

Examples of such an aluminum alloy include alloys having an aluminum content of 50 mass% or more, and specific examples thereof include A7000-series alloys (for example, A7003, A7075, and A7N01), A6000-series alloys (for example, A6061, A6082, and A6110), A5000-series alloys, and A3000-series alloys.

The main body may be an extruded profile, a die cast material, a cast material, a forged material, or the like formed using a metal material or a metal alloy material. Among them, the extruded profile is preferable from the viewpoint of productivity and the like.

The extruded profile of the main body can be manufactured, for example, as follows. A step of continuously casting a cast rod by supplying a molten metal of a metal material or a metal alloy material having predetermined properties to a continuous casting apparatus, a step of homogenizing the cast rod, a step of cutting the cast rod to a predetermined length to obtain a billet as a material for extrusion, a step of chamfering the outside edge of the billet, and a step of water-cooling-quenching the billet immediately after hot extrusion to form an extruded profile having a predetermined cross-sectional shape are performed in the mentioned order. Next, the extruded profile is cut to a predetermined length, predetermined processing such as chamfering and deburring is performed on both cut end surfaces, and a bent portion is formed by bending, whereby the extruded profile can be formed. The extruded profile can be subjected to a heat treatment step such as an artificial aging treatment either before or after cutting of the extruded profile, or before or after bending of the extruded profile. For example, in a case where the extruded profile is formed using an A6000-series alloy and/or an A7000-series alloy, it is preferable to perform such a heat treatment step.

### Metal Reinforcing Portion

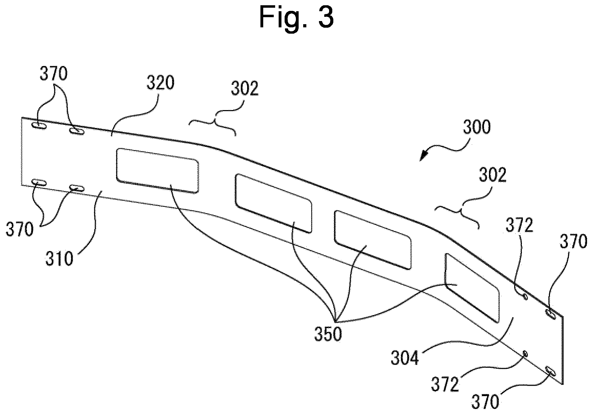

Fig. 3 illustrates a metal reinforcing portion of an embodiment. A metal reinforcing portion 300 includes at least one second joining portion extending along the vehicle width direction. In a case of this figure, the metal reinforcing portion 300 includes a lower second joining portion 310 and an upper second joining portion 320 as the second joining portions. In a case where the metal reinforcing portion 300 includes the two second joining portions, that is, the lower second joining portion 310 and the upper second joining portion 320, the metal reinforcing portion 300 preferably includes a reinforcing portion main body 304.

The reinforcing portion main body 304 has a plate shape with the vehicle width direction as a longitudinal direction, a vehicle up-down direction as a lateral direction, and a vehicle front-rear direction as a thickness direction, and includes a bent portion 302 at a position corresponding to the bent portion 202 of the main body 200. The reinforcing portion main body 304 integrally includes the lower second joining portion 310 and the upper second joining portion 320 on the lower side and the upper side of a surface thereof on the main body side, respectively.

Although the reinforcing portion main body 304 is illustrated as including the bent portion 302 in Fig. 3, when the main body 200 has a linear shape, the reinforcing portion main body 304 may also have a linear shape.

The lower second joining portion 310 is a strip-shaped region that is disposed on the lower side of the reinforcing portion main body 304, that extends from one end to the other end in the vehicle width direction, and that has a predetermined width. The upper second joining portion 320 is a strip-shaped region that is disposed on the upper side of the reinforcing portion main body 304, that extends from one end to the other end in the vehicle width direction, and that has a predetermined width. Widths of the lower second joining portion 310 and the upper second joining portion 320 are selected according to a length of the first joining portion in the vehicle up-down direction. In this way, the lower second joining portion 310 and the upper second joining portion 320 extend over the entire region of the reinforcing portion main body 304 in the longitudinal direction. The lower second joining portion 310 and the upper second joining portion 320 are integrated through the reinforcing portion main body 304. The lower second joining portion 310 and the upper second joining portion 320 are joined to the lower first joining portion 210 and the upper first joining portion 220, respectively, in a state where the surfaces of the lower second joining portion 310 and the upper second joining portion 320 on the main body side are in contact with the lower first joining portion 210 and the upper first joining portion 220, respectively.

As illustrated in Fig. 1 and Fig. 4, the lower second joining portion 310 and the upper second joining portion 320 of the metal reinforcing portion 300 are joined to the lower first joining portion 210 and the upper first joining portion 220 of the main body, respectively. The lower second joining portion 310 and the upper second joining portion 320 are joined to the lower first joining portion 210 and the upper first joining portion 220 at joint surfaces intersecting the front-rear direction of the vehicle. The main body 200 has an open cross section, and the lower first joining portion 210 and the upper first joining portion 220 of the main body 200 are joined to the lower second joining portion 310 and the upper second joining portion 320 of the metal reinforcing portion 300, respectively, to form a hollow portion 260 inside the main body 200.

In Fig. 1, a length of the metal reinforcing portion 300 in the vehicle width direction is the same as the length of the main body 200 in the vehicle width direction, that is, 100% of the length of the main body 200 in the vehicle width direction, and the metal reinforcing portion 300 is provided with elongated holes 370 and positioning holes 372 at positions corresponding to the elongated holes 270 and the positioning holes 272 of the main body 200. In this embodiment, since peripheral portions of the elongated hole 370 and the positioning hole 372 of the metal reinforcing portion 300 function as an attachment fitting with high strength, the bumper reinforcement 400 can be attached to the crash boxes 40 with high strength. Additionally, when the ionization tendencies of the material of the crash box 40 and the material of the metal reinforcing portion 300 are close to each other as in a case where the crash box 40 is made of iron and the material of the metal reinforcing portion 300 is iron, electrolytic corrosion is less likely to occur even if the crash box 40 and the metal reinforcing portion 300 come into contact with each other. Thus, according to this embodiment, the main body 200 and the crash box 40 are separated from each other by the metal reinforcing portion 300, thereby reducing the risk of the occurrence of electrolytic corrosion at the attachment portion of the bumper reinforcement 400 to the crash box 40.

The dimensions, thickness, and shape of the metal reinforcing portion 300 can be appropriately set according to a vehicle (for example, a passenger car, a truck, or the like) to which the bumper reinforcement is attached, and required performance (for example, weight reduction, appropriate rigidity, and plastic deformability).

A width h1 of the upper second joining portion 320 and a width h2 of the lower second joining portion 310 can each independently be 10 mm or more, 15 mm or more, 20 mm or more, or 25 mm or more, and can be 50 mm or less, 45 mm or less, 40 mm or less, or 35 mm or less. The width of the second joining portion can be appropriately set according to a joining force required between the second joining portion and the first joining portion of the main body to be joined, and the like.

A thickness t2 of the metal reinforcing portion can be 0.2 mm or more, 0.3 mm or more, or 0.4 mm or more, and can be 2.0 mm or less, 1.5 mm or less, or 1.0 mm or less. Thicknesses of respective portions (for example, the reinforcing portion main body, the first joining portion, and the second joining portion) constituting the metal reinforcing portion can be appropriately set according to required performance such as weight reduction, appropriate rigidity, and plastic deformability. The thickness of the metal reinforcing portion 300 may be the same at each portion, or may be different at each portion.

The metal reinforcing portion 300 illustrated in Fig. 3 includes four holes (lightening holes) 350 in the vicinity of the center. Providing the lightening holes makes it possible to further reduce the weight of the metal reinforcing portion. One or more holes only need to be provided, and the number, size, and shape of the holes can be appropriately set according to required performance (for example, weight reduction, appropriate rigidity, and plastic deformability).

Examples of the material of the metal reinforcing portion include metal materials and metal alloy materials. The Young's modulus of the material of the metal reinforcing portion is higher than the Young's modulus of the material of the main body by a value equal to or more than 5 GPa. The Young's modulus of the material of the metal reinforcing portion is preferably higher than the Young's modulus of the material of the main body preferably by 30 GPa or more, more preferably by 50 GPa or more, and even more preferably by 80 GPa or more. In an embodiment, the Young's modulus of the material of the metal reinforcing portion is higher than the Young's modulus of the material of the main body by a value within a range from 5 GPa to 180 GPa, from 30 GPa to 170 GPa, from 50 GPa to 160 GPa, or from 80 GPa to 150 GPa. As the material of the metal reinforcing portion, iron, steel, titanium, a titanium alloy, aluminum, and an aluminum alloy are preferable, and iron, steel, and an aluminum alloy with high strength and high rigidity (for example, an Al-Si-based aluminum alloy and an Al-Zn-based aluminum alloy) are more preferable. These materials may be used alone or in combination of two or more.

Regarding the Young's moduli of the metal materials and metal alloy materials that are to be used for the main body and the metal reinforcing portion, it is known that, for example, an aluminum alloy A6061-T6 has a Young's modulus of 68.3 GPa, a 440 MPa grade steel sheet has a Young's modulus of 203 GPa, stainless steel SUS304 has a Young's modulus of 197 GPa, a high-rigidity aluminum alloy A4032-T6 has a Young's modulus of 79 GPa, and a titanium alloy Ti-6Al-4V has a Young's modulus of 106 GPa.

The metal reinforcing portion can be formed by, for example, processing a plate-like metal material or metal alloy material by using a known processing method such as press processing, laser processing, shearing processing, bending processing, or cutting processing.

### Method for Manufacturing Automobile Structural Material (Joined body)

A method for manufacturing an automobile structural material according to an embodiment includes: a pre-joining process of forming a layered body in a state in which a first metal member, a solid joining agent containing, as a main component, an amorphous thermoplastic resin that is at least one selected from the group consisting of thermoplastic epoxy resins and phenoxy resins, and a second metal member to be joined to the first metal member are arranged in this order; and a joining process of heating and pressurizing the layered body, melting the solid joining agent, thereby joining the first metal member and the second metal member. In the pre-joining process, joining between the first metal member and the solid joining agent and between the second metal member and the solid joining agent is not performed, but the joining is performed in the next joining process. The solid joining agent may have tackiness, and in this case, the solid joining agent is temporarily fixed to the base material in the pre-joining process.

A Young's modulus of the second metal member is higher than a Young's modulus of the first metal member by 5 GPa or more. One of the roles of a general automobile structural material is to retain a shape of the automobile structural material for as long a time as possible while absorbing energy when a force is applied from the outside, such as collision, and thus to keep automobile components at predetermined positions. Energy absorbability of an automobile structural material formed only of a material having a high Young's modulus is insufficient. On the other hand, an automobile structural material formed only of a material having a low Young's modulus has low shape retainability. As described in the present disclosure, an automobile structural material combining metal materials having different Young's moduli includes both a portion exhibiting energy absorbability (material with a low Young's modulus) and a portion exhibiting shape retainability (material with a high Young's modulus) in one structural material, so that the automobile structural material as a whole can achieve both the functions of the energy absorbability and the shape retainability. When a difference between the Young's modulus of the second metal member and the Young's modulus of the first metal member is less than 5 GPa, the above-mentioned gain produced by combining materials having different Young's moduli is small, and the advantage as compared with a structural material integrally formed of one kind of material cannot be obtained. The Young's modulus of the second metal member is preferably higher than that of the first metal member preferably by 10 GPa or more, more preferably by 20 GPa or more, and even more preferably by 30 GPa or more. In an embodiment, the Young's modulus of the second metal member is higher than the Young's modulus of the first metal member by a value within a range from 5 GPa to 180 GPa, 10 GPa to 170 GPa, 20 GPa to 160 GPa, or 30 GPa to 150 GPa.

In an embodiment in which the automobile structural material is the bumper reinforcement 30, the first metal member is the main body extending along the vehicle width direction and including at least one first joining portion. The second metal member is the metal reinforcing portion extending along the vehicle width direction and including at least one second joining portion. The first joining portion of the main body and the second joining portion of the metal reinforcing portion are joined to each other through the solid joining agent. The metal reinforcing portion may be disposed closer to the vehicle body side relative to the main body, or alternatively, the main body may be disposed closer to the vehicle body side relative to the metal reinforcing portion.

### Pre-Joining Process

In the pre-joining process, a layered body is formed, the layered body being in a state in which the first metal member, the solid joining agent containing, as a main component, an amorphous thermoplastic resin that is at least one type selected from the group consisting of thermoplastic epoxy resins and phenoxy resins, and the second metal member are arranged in this order. In the layered body, neither the first metal member and the solid joining agent nor the solid joining agent and the second metal member are joined to each other, and the layered body is in a state in which independent members are overlapped with each other.

"Solid" of the solid joining agent means that it is solid at room temperature, that is, it does not have fluidity under a non-pressurized state at 23°C. It is desirable that the solid joining agent be capable of retaining its outer shape without deformation for 30 days or longer under a non-pressurized condition at 23°C, and further have a property of not deteriorating.

The "main component" means a component having the highest content among the resin components in the solid joining agent and having a content of 50 mass% or more in the resin components in the solid joining agent. The solid joining agent contains the resin component in an amount of preferably 50 mass% or more, more preferably 70 mass% or more, even more preferably 80 mass% or more, and particularly preferably 90 mass% or more.

### Solid Joining Agent

The solid joining agent contains, as a main component, an amorphous thermoplastic resin that is at least one type selected from the group consisting of thermoplastic epoxy resins and phenoxy resins. In the known joining using a liquid adhesive, there is a risk that an air bubble is mixed in a joining portion, or when irregularities are present on the surface of a metal member, metal members to be joined may be grounded. Mixing of an air bubble into a joining portion or grounding between metal members may cause electrolytic corrosion between different kinds of metal members. In the present disclosure, a solid joining agent containing, as a main component, an amorphous thermoplastic resin that is at least one type selected from the group consisting of thermoplastic epoxy resins and phenoxy resins is used, and hence mixing of an air bubble can be prevented and metal members can be joined to each other while the irregularities on the surface of the metal member are absorbed due to the thickness of the solid joining agent. Therefore, according to the present disclosure, contact between the metal members can be prevented and electrolytic corrosion, possibly occurring between the different kinds of metal members, can be suppressed.

The amorphous resin in the present disclosure is a resin that has a melting point (Tm) but does not have a clear endothermic peak (melting point) associated with melting or has a very small endothermic peak in measurement using a differential scanning calorimeter (DSC). A heat of fusion is calculated from an area of the endothermic peak of the DSC and a mass of the thermoplastic resin component. In a case where an inorganic filler or the like is contained in the solid joining agent, the heat of fusion is calculated from the mass of the resin component excluding the inorganic filler.

In an embodiment, the amorphous thermoplastic resin in the present disclosure means a resin having properties measured by the following procedure. A sample of 2 to 10 mg is weighed, placed in an aluminum pan, and heated from 23°C to 200°C or higher at 10°C/min using a DSC (DSC8231 available from Rigaku Corporation) to obtain a DSC curve. Then, when the heat of fusion is calculated from the area of an endothermic peak at the time of melting as determined from the DSC curve, and the weighed value, that having a heat of fusion of 15 *J*/*g* or less is regarded as an amorphous thermoplastic resin.

From the viewpoint of sufficiently imparting the properties of the amorphous thermoplastic resin to the solid joining agent, the content of the amorphous thermoplastic resin is preferably 60 mass% or more, more preferably 70 mass% or more, even more preferably 80 mass% or more, and most preferably 90 mass% or more of the resin components in the solid joining agent.

The heat of fusion is preferably 15 J/g or less, more preferably 11 J/g or less, even more preferably 7 J/g or less, and still even more preferably 4 J/g or less, and it is most preferable that the fusion peak be the detection limit or less.

An epoxy equivalent is preferably 1600 or more, more preferably 2000 or more, even more preferably 5000 or more, and particularly preferably 9000 or more, and it is most preferable that the epoxy equivalent be the detection limit or more and an epoxy group be not substantially detected.

In an embodiment, when the solid joining agent contains, as a main component, an amorphous thermoplastic resin having an epoxy equivalent of 1600 or more and a heat of fusion of 15 *J*/*g* or less is used, a rapid decrease in viscosity as found in a known hot melt adhesive does not occur during heating, and a low viscosity (0.001 to 100 Pa·s) state is not achieved even in a high temperature region exceeding 200°C. Accordingly, the solid joining agent does not flow out from the layered body even in a molten state, and hence the thickness of the adhesive layer can be stably secured. As a result, contact between the metal members can be more reliably prevented to prevent electrolytic corrosion, and a high adhesive force can be stably obtained. The epoxy equivalent (the mass of the resin containing 1 mol of an epoxy group) in the present disclosure is a value of the epoxy equivalent of the thermoplastic epoxy resin component or the phenoxy resin component contained in the solid joining agent before joining, and is a value (in "g/eq.") measured by the method specified in JIS K 7236:2001. Specifically, the epoxy equivalent of a resin is measured using a potentiometric titrator, using cyclohexanone as a solvent, adding a solution of tetraethylammonium bromide in acetic acid to the resin, and using 0.1 mol/L perchloric acid-acetic acid solution. With regard to a solvent-diluted product (resin varnish), the epoxy equivalent is calculated as a numerical value in terms of solid content based on a volatile component. The epoxy equivalent of a mixture of two or more types of resin can also be calculated from the content and the epoxy equivalent of each resin.

A melting point of the amorphous thermoplastic resin that is the main component of the solid joining agent is preferably from 50°C to 400°C, more preferably from 60°C to 350°C, and even more preferably from 70°C to 300°C. When the melting point is within a range of 50°C to 400°C, the solid joining agent is efficiently deformed and melted by heating and effectively wet-spreads on a joint surface, so that a high adhesive force can be obtained. In the present disclosure, the melting point of the amorphous thermoplastic resin means a temperature at which the amorphous thermoplastic resin is substantially softened from a solid state to become thermoplastic and can be melted and bonded.

In a joined body containing a known thermosetting adhesive, it is difficult to disassemble a joined body, and it is difficult to separate different materials constituting the joined body for recycling (i.e., poor in recyclability). In addition, in a case of using a thermosetting adhesive, it is difficult to re-attach (i.e., poor in repairability) if a joined portion is displaced or the like in a manufacturing process of a joined body or if an adherend has a defect and needs to be replaced, thereby resulting in lack of convenience. On the other hand, the solid joining agent can be softened and melted by heat and two adherends can be easily separated from each other, thereby providing excellent recyclability. In addition, the solid joining agent is thermoplastic, and hence, softening, melting, and hardening (solidification) can be reversibly repeated, and the repairability is also excellent.

### Thermoplastic Epoxy Resin

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanato group, and a cyanate ester group. When such a compound is used, a polymerization reaction for forming a linear polymer preferentially proceeds, thereby allowing formation of a thermoplastic epoxy resin having desired properties.

The (a) bifunctional epoxy resin monomer or oligomer refers to an epoxy resin monomer or oligomer having two epoxy groups in the molecule. Examples of the (a) bifunctional epoxy resin monomer or oligomer include a bisphenol A-type epoxy resin, a bisphenol F-type epoxy resin, a bifunctional phenol novolak-type epoxy resin, a bisphenol AD-type epoxy resin, a biphenyl-type epoxy resin, a bifunctional naphthalene-type epoxy resin, a bifunctional alicyclic epoxy resin, a bifunctional glycidyl ester-type epoxy resin (e.g., diglycidyl phthalate, diglycidyl tetrahydrophthalate, dimer acid diglycidyl ester), a bifunctional glycidylamine-type epoxy resin (e.g., diglycidyl aniline, diglycidyl toluidine), a bifunctional heterocyclic epoxy resin, a bifunctional diarylsulfone-type epoxy resin, a hydroquinone-type epoxy resin (e.g., hydroquinone diglycidyl ether, 2,5-di-tert-butylhydroquinone diglycidyl ether, resorcinol diglycidyl ether), a bifunctional alkyleneglycidyl ether-based compound (e.g., butanediol diglycidyl ether, butenediol diglycidyl ether, butynediol diglycidyl ether), a bifunctional glycidyl group-containing hydantoin compound (e.g., 1,3-diglycidyl-5,5-dialkylhydantoin, 1-glycidyl-3-(glycidoxyalkyl)-5,5-dialkylhydantoin), a bifunctional glycidyl group-containing siloxane (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A-type epoxy resin, a bisphenol F-type epoxy resin, a bisphenol S-type epoxy resin, and a biphenyl-type epoxy resin are preferable in terms of reactivity and workability.

Examples of the (b) bifunctional compound having a phenolic hydroxy group include mononuclear aromatic dihydroxy compounds having one benzene ring such as catechol, resorcinol, and hydroquinone; bisphenol compounds such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group such as diallylresorcinol, diallylbisphenol A, and triallyldihydroxybiphenyl; and dibutylbisphenol A.

Examples of the (b) bifunctional compound having a carboxy group include adipic acid, succinic acid, malonic acid, cyclohexanedicarboxylic acid, phthalic acid, isophthalic acid, and terephthalic acid.

Examples of the (b) bifunctional compound having a mercapto group include ethylene glycol bisthioglycolate and ethylene glycol bisthiopropionate.

Examples of the (b) bifunctional compound having an isocyanato group include diphenylmethane diisocyanate (MDI), isophorone diisocyanate (IPDI), hexamethylene diisocyanate (HMDI), and tolylene diisocyanate (TDI).

Examples of the (b) bifunctional compound having a cyanate ester group include 2,2-bis(4-cyanatophenyl)propane, 1,1-bis(4-cyanatophenyl)ethane, and bis(4-cyanatophenyl)methane.

Among the (b) described above, a bifunctional compound having a phenolic hydroxy group is preferable because it can form a thermoplastic polymer having suitable properties. A bifunctional compound having two phenolic hydroxy groups and having a bisphenol structure or a biphenyl structure is preferable from the viewpoint of heat resistance and adhesiveness, and bisphenol A, bisphenol F, and bisphenol S are preferable from the viewpoint of heat resistance and cost.

In a case where the (a) is a bisphenol A-type epoxy resin, a bisphenol F-type epoxy resin, a bisphenol S-type epoxy resin, or a biphenyl-type epoxy resin and the (b) is bisphenol A, bisphenol F, or bisphenol S, the polymer obtained by polymerization of the (a) and (b) has a structure that has a main chain in which a paraphenylene structure and an ether bond constituting a main skeleton are linked by an alkylene group, and a side chain in which a hydroxy group generated by polyaddition is arranged. A linear structure derived from the main skeleton having the paraphenylene structure and the ether bond can enhance the mechanical strength of the polymer after polymerization, and the hydroxy group arranged in the side chain can improve the adhesion to the base material. As a result, high adhesive strength at the same level as that of a thermosetting resin can be achieved while workability is maintained. Furthermore, by softening and melting with heat, recycling and repairing become possible, and recyclability and repairability that are problems in a thermosetting resin can be improved.

### Phenoxy Resin

The phenoxy resin is a polyhydroxy polyether synthesized from a bisphenol compound and epichlorohydrin, and has thermoplasticity. As a method for manufacturing the phenoxy resin, there are known a method for directly reacting a dihydric phenol compound with epichlorohydrin and a method for subjecting a diglycidyl ether of a dihydric phenol compound and a dihydric phenol compound to an addition polymerization reaction, and the phenoxy resin may be obtained by any of these methods. In the case of a direct reaction between a dihydric phenol compound and epichlorohydrin, examples of the dihydric phenol compound include phenol compounds such as bisphenol A, bisphenol F, bisphenol S, biphenol, biphenylene diol, and fluorene diphenyl. Among these, bisphenol A, bisphenol F, and bisphenol S are preferable from the viewpoint of cost, adhesiveness, viscosity, and heat resistance. In addition to the dihydric phenol compound, an aliphatic glycol, such as ethylene glycol, propylene glycol, or diethylene glycol, may be included in the direct reaction. These may be used alone, or in combination of two or more thereof. The phenoxy resin has a chemical structure similar to that of an epoxy resin, and has a structure that has a main chain in which a paraphenylene structure and an ether bond constituting a main skeleton are linked, and a side chain in which a hydroxy group is arranged.

### Thermoplastic Epoxy Resin and Phenoxy Resin

Weight average molecular weights of the thermoplastic epoxy resin and the phenoxy resin are each preferably 10000 to 500000, more preferably 18000 to 300000, and even more preferably 20000 to 200000 as a value measured by gel permeation chromatography (GPC) and calibrated with polystyrene. The weight average molecular weight is a value calibrated with standard polystyrene calculated from an elution peak position detected by GPC. When the weight average molecular weight is in the above range, thermoplasticity and heat resistance are well balanced, and hence, it is possible to efficiently form a joined body by melting and it is also possible to enhance the heat resistance of the joined body. When the weight average molecular weight is 10000 or more, heat resistance is excellent, and when the weight average molecular weight is 500000 or less, viscosity at the time of melting is low and adhesiveness is high.

### Method for Manufacturing Solid Joining Agent

A method for manufacturing the solid joining agent is not particularly limited. For example, the solid joining agent can be manufactured by heating and polymerizing a monomer or an oligomer of a bifunctional epoxy compound. A solvent may be added to reduce viscosity during polymerization to facilitate stirring. In a case where a solvent is added, it is necessary to remove the solvent, and the solid joining agent may be obtained by performing drying and/or polymerization on a release film or the like.

As needed, another additive may be blended to the solid joining agent as long as the effects of the present invention are not impaired. A blending amount of the additive with respect to the total amount of the amorphous thermoplastic resin is preferably 50 vol.% or less, more preferably 30 vol.% or less, even more preferably 20 vol.% or less, and most preferably 10 vol.% or less. In the present disclosure, the vol.% of the additive represents a volume ratio of the additive contained before the polymerization of the monomer or oligomer of the bifunctional epoxy compound based on the volume of the total amount of the amorphous thermoplastic resin, and the volume of the additive can be determined by dividing the mass of the contained additive by the true specific gravity of the additive.

Examples of the additive include a viscosity modifier, an inorganic filler, an organic filler (resin powder), an antifoaming agent, a coupling agent such as a silane coupling agent, and a pigment. These additives may be used alone, or in combination of two or more thereof. Examples of the viscosity modifier include a reactive diluent. Examples of the inorganic filler include spherical fused silica, metal powders of metals such as iron, silica sand, talc, calcium carbonate, mica, acid clay, diatomaceous earth, kaolin, quartz, titanium oxide, silica, phenol resin microballoon, and glass balloon.

The solid joining agent thus obtained has a low content of unreacted monomers or terminal epoxy groups or substantially no unreacted monomer or terminal epoxy group. Hence, the solid joining agent is excellent in storage stability and can be stored for a long period of time at room temperature.

The form of the solid joining agent before melting is not particularly limited, but preferably has any shape selected from the group consisting of a film, a rod, a pellet, and powder, and more preferably has a film shape. While reliably holding the metal members to be joined at a predetermined interval over the entire joint surface, the film-shaped solid joining agent can join these metal members to each other. Therefore, the film-shaped solid joining agent is particularly advantageous for preventing electrolytic corrosion. A thickness of the film-shaped solid joining agent is preferably 10 µm to 5 mm, more preferably 20 µm to 3 mm, and even more preferably 30 µm to 0.5 mm. When the thickness of the film-shaped solid joining agent is set to 10 µm or more, electrolytic corrosion between the first metal member and the second metal member can be more reliably prevented, and an adhesive force can be ensured. When the thickness of the film-shaped solid joining agent is set to 5 mm or less, the adhesive force, in a shear direction, of the joint surface can be increased.

The solid joining agent may have tackiness within a range that does not impair the adhesive force and the heat resistance. In this case, the solid joining agent can be temporarily fixed to the base material in the layered body preparation process.

### Joining Process

In the joining process, the layered body is heated and pressurized to melt the solid joining agent, and then the temperature is lowered to solidify the solid joining agent, thereby joining the first metal member and the second metal member.

The temperature in the heating and pressurizing is preferably 100°C or higher, more preferably 120°C or higher, and even more preferably 150°C or higher. The temperature in the heating and pressurizing is preferably 400°C or less, more preferably 350°C or less, and even more preferably 300°C or less. Any combination of these lower and upper limits is acceptable. The temperature in the heating and pressurizing is preferably from 100°C to 400°C, more preferably from 120°C to 350°C, and even more preferably from 150°C to 300°C. When heating is performed at 100°C to 400°C, the solid joining agent is efficiently deformed and melted to effectively wet-spread on the joint surface, and hence a high adhesive force can be obtained.

A pressure in the heating and pressurizing is preferably 0.01 MPa or higher, more preferably 0.1 MPa or higher, and even more preferably 0.2 MPa or higher. The pressure in the heating and pressurizing is preferably 20 MPa or less, more preferably 10 MPa or less, and even more preferably 5 MPa or less. Any combination of these lower and upper limits is acceptable. The pressure in the heating and pressurizing is preferably from 0.01 to 20 MPa, more preferably from 0.1 to 10 MPa, and even more preferably from 0.2 to 5 MPa. The pressure referred to as herein means an average pressure at the joint surface of the first metal member and the second metal member. When the pressure is within such a range, the solid joining agent is efficiently deformed and effectively wet-spreads on the joint surface, and thus a high adhesive force can be obtained.

The thermoplastic epoxy resin and the phenoxy resin, which are the main components of the solid joining agent, have a low cohesive force in the resin and have a hydroxy group, and hence have strong interaction with the base material, and different kinds of materials can be joined with an adhesive force higher than that of a known crystalline hot melt adhesive.

The joining between the first metal member and the second metal member utilizes phase changes (solid-liquid-solid) of the solid joining agent and does not involve a chemical reaction, and hence the joining can be completed in a shorter time than that of a known thermosetting epoxy resin.

The thickness of the solid joining agent after the joining is preferably 10 µm to 5 mm, more preferably 20 µm to 3 mm, and even more preferably 30 µm to 0.5 mm. When the thickness of the solid joining agent after the joining is set to 10 µm or more, electrolytic corrosion between the first metal member and the second metal member can be more reliably prevented, and an adhesive force can be ensured. When the thickness of the solid joining agent after the joining is set to 5 mm or less, the adhesive force, in the shear direction, of the joint surface can be increased, and the shape retainability of the automobile structural material can be further improved.

### Bumper Reinforcement 30 (Joined Body)

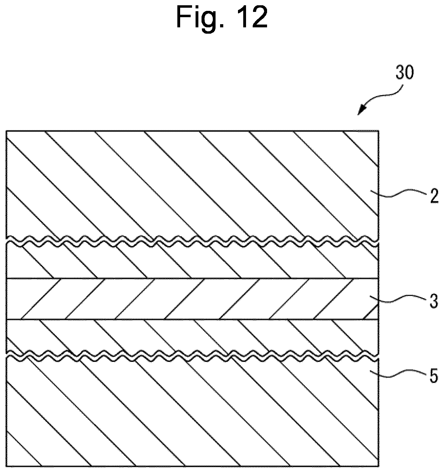

Fig. 12 is a schematic cross-sectional view illustrating a state in which the first metal member 2 and the second metal member 5 are joined to each other through the solid joining agent, and illustrates, for example, a joining portion between the lower first joining portion 210 (corresponding to the first metal member 2) of the main body 200 and the lower second joining portion 310 (corresponding to the second metal member 5) of the metal reinforcing portion 300, or a joining portion between the upper first joining portion 220 (corresponding to the first metal member 2) of the main body 200 and the upper second joining portion 320 (corresponding to the second metal member 5) of the metal reinforcing portion 300, as illustrated in Fig. 1 and Fig. 4.

In the joined body illustrated in Fig. 12, the first metal member 2 and the second metal member 5 are integrally joined to each other through the adhesive layer 3. The adhesive layer 3 is formed by melting and then solidifying the solid joining agent containing an amorphous thermoplastic resin that is at least one type selected from the group consisting of thermoplastic epoxy resins and phenoxy resins as a main component. The joined body of the first metal member 2 and the second metal member 5 exhibits excellent joining strength. The joining strength is affected by many factors such as the thickness of the adhesive layer, the molecular weight and chemical structure of the polymer constituting the adhesive, mechanical properties, and viscoelastic properties, in addition to the strength of interfacial interaction between the adhesive layer and the base material. Accordingly, although details of the mechanism by which the joined body of the present disclosure exhibits excellent joining strength are not clear, it is presumed that the main factors are the low cohesive force of the amorphous thermoplastic resin constituting the adhesive layer 3, and the presence of hydroxy groups in the resin to form chemical bonds or intermolecular forces, such as hydrogen bonds and van der Waals forces, at the interface between the adhesive layer and a first metal member 2 and at the interface between the adhesive layer and a second metal member 5. However, in the joined body, the state or property of the interface of the joined body is attributable to an extremely thin chemical structure having a thickness of a nanometer level or less, and thus it is difficult to analyze the state or property. Accordingly, it is impossible or impractical in the current technology to distinguishably express the joined body and a joined body not containing the solid joining agent of the present disclosure by identifying the state or property of the interface of the joined body of the present disclosure.

The automobile structural material of the present disclosure in which the adhesive layer contains an amorphous thermoplastic resin is excellent in recyclability and repairability, and can be easily disassembled into the first metal member 2 and the second metal member 5, for example, the main body 200 and the metal reinforcing portion 300 in a case of the bumper reinforcement, by heating the joined body.

A high adhesive force may be obtained by subjecting the first metal member 2 and/or the second metal member 5 to an appropriate pretreatment. As the pretreatment, a pretreatment for cleaning the surface of the base material or a pretreatment for forming irregularities on the surface is preferable. The pretreatment may be performed singly or in combination of two or more thereof. As specific methods of these pretreatments, known methods can be used.

The first metal member 2 and the second metal member 5 are preferably subjected to at least one type of pretreatment selected from the group consisting of a degreasing treatment, a UV ozone treatment, a blast treatment, a polishing treatment, a plasma treatment, and an etching treatment.

### Action and Effect

As illustrated in Fig. 4, the action and effect of the bumper reinforcement will be described with reference to an example in which the bumper reinforcement receives the heavy load W in the vehicle front-rear direction. First, a force due to the heavy load W is applied to the front surface portion 250 of the main body 200. The force transmits from the front surface portion 250 through the lower portion 230 and the upper portion 240 to the lower first joining portion 210 and the upper first joining portion 220. The main body 200 has a hat form, and thus the force is dispersed and transmitted to the metal reinforcing portion 300 as a force F1 in the vehicle front-rear direction and to the lower first joining portion 210 and the upper first joining portion 220 as an outward force F2 in a direction along the joint surface, in the case of Fig. 4, in the vehicle up-down direction.

The lower second joining portion 310 and the upper second joining portion 320 are joined to the lower first joining portion 210 and the upper first joining portion 220 at joint surfaces intersecting the front-rear direction of the vehicle. In other words, the force F2 is transmitted to the joint surface. The force F2 is smaller than the heavy load W by an amount by which the force F1 is dispersed in the force due to the heavy load W. Thus, the joining strength of the lower second joining portion 310 and the upper second joining portion 320 and the joining strength of the lower first joining portion 210 and the upper first joining portion 220 can be significantly improved as compared with a case where the joint surfaces are provided parallel to the vehicle front-rear direction.

The lower first joining portion 210 and the upper first joining portion 220 are joined to the lower second joining portion 310 and the upper second joining portion 320, respectively, and the lower second joining portion 310 and the upper second joining portion 320 are formed integrally with the reinforcing portion main body 304. Thus, the metal reinforcing portion 300 exerts stresses against the force F2 described above. In other words, the reinforcing portion main body 304 exerts stresses against the force F2 described above. Consequently, the metal reinforcing portion 300 suppresses outward deformation of the lower first joining portion 210 and the upper first joining portion 220 of the main body 200 in the vehicle up-down direction.

Furthermore, the heavy load W generates a force for bending the bumper reinforcement 400 in the vehicle width direction. The lower second joining portion 310 and the upper second joining portion 320 of the metal reinforcing portion 300 are joined to the lower first joining portion 210 and the upper first joining portion 220 of the main body 200 over the entire region in the vehicle width direction, respectively. As a result, the metal reinforcing portion 300 maintains a state of being joined to the main body 200, whereby the metal reinforcing portion 300 exerts a stress against a force of bending in the vehicle width direction. Consequently, the metal reinforcing portion 300 suppresses bending of the main body 200 in the vehicle width direction.

Accordingly, the bumper reinforcement 400 can effectively transmit, to the crash boxes, an impact energy that cannot be absorbed while the force generated by the heavy load W is absorbed by plastic deformation of the main body 200 and the metal reinforcing portion 300. As a result, in the vehicle provided with the bumper reinforcement 400, the impact energy caused by the heavy load W is effectively transmitted to the crash boxes 40, and the impact energy is efficiently absorbed, whereby damage to the vehicle body can be suppressed.

### Modification 1: Modification 1 of Bumper Reinforcement

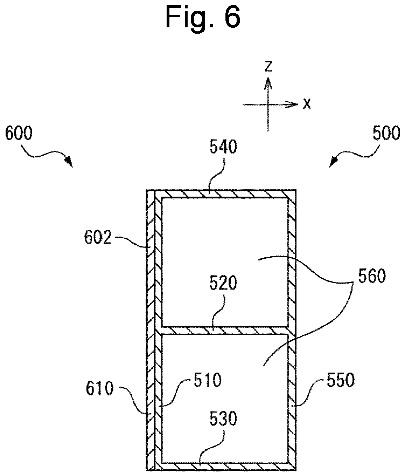

Fig. 6 illustrates a cross-sectional view of a bumper reinforcement according to another embodiment. The bumper reinforcement includes a main body 500 and a metal reinforcing portion 600. With regard to materials and thicknesses of the main body 500 and the metal reinforcing portion 600, an angle of a reinforcing rib 620 in the metal reinforcing portion 600, and the like, those described in the main body 200 and the metal reinforcing portion 300 can be similarly employed.

The main body 500 is closed on the side opposite to a front surface portion 550, and the closed portion constitutes a first joining portion 510. In other words, the main body 500 has a closed cross section and such a main body may be referred to as a "closed main body" in the present disclosure. The metal reinforcing portion 600 includes a reinforcing portion main body 602 extending along the vehicle width direction and a second joining portion 610. The reinforcing portion main body 602 has a plate shape with the vehicle width direction as a longitudinal direction, the vehicle up-down direction as a lateral direction, and the vehicle front-rear direction as a thickness direction. The reinforcing portion main body 602 is integrated with the second joining portion 610. The second joining portion 610 is joined to the first joining portion 510 in a state where the entire surface of the reinforcing portion main body 602 on the main body side is in contact with the first joining portion 510. The second joining portion 610 of the metal reinforcing portion 600 is joined to the first joining portion 510.

### Closed Main Body

In the closed main body 500, two hollow portions 560 are formed with a middle portion 520 serving as a boundary. The number of hollow portions of the closed main body is not particularly limited and can be appropriately selected in consideration of weight reduction, appropriate rigidity, and plastic deformability, but the hollow portions are preferably formed at two or more positions. For example, in a case where three hollow portions are formed, two middle portions 520 are present.

In Fig. 6, an outer peripheral cross-sectional shape of the main body 500 is rectangular. The outer peripheral cross-sectional shape of the closed main body is not particularly limited, and may be a polygonal shape, a square shape, a trapezoidal shape, a semicircular shape, or the like.

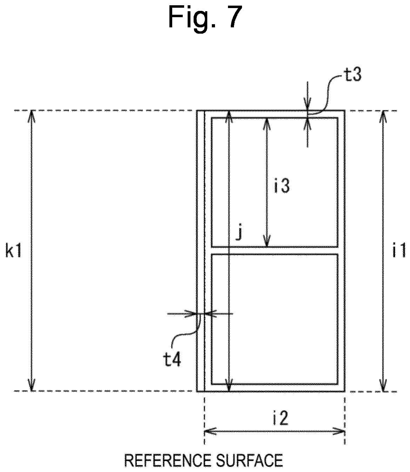

Fig. 7 illustrates a cross-sectional view related to dimensions of the main body 500 and the metal reinforcing portion 600. The following description using Fig. 7 is not limited to the embodiment in which the cross-sectional shape of the main body is as illustrated in Fig. 7.

A height i1 of the front surface portion 550 and a width j of the first joining portion 510 can each independently be 50 mm or more, 60 mm or more, 80 mm or more, or 100 mm or more, and can be 200 mm or less, 180 mm or less, 160 mm or less, or 150 mm or less. The height i1 of the front surface portion 550 and the width j of the first joining portion 510 can be appropriately set according to required performances (joining strength, rigidity, and plastic deformability).

A depth i2 of the main body 500 can be 20 mm or more, 30 mm or more, 40 mm or more, or 50 mm or more, and can be 100 mm or less, 90 mm or less, 80 mm or less, or 70 mm or less. The depth i2 of the main body 500 can be appropriately set according to required rigidity and plastic deformability.

A height i3 of a hollow 560 can be 20 mm or more, 30 mm or more, 40 mm or more, or 50 mm or more, and can be 100 mm or less, 90 mm or less, 80 mm or less, or 70 mm or less. The height i3 of the hollow 560 can be appropriately set according to the required rigidity and plastic deformability.

A thickness t3 of the main body 500 can be within a range similar to that of the thickness t1 of the main body 200.

### Metal Reinforcing Portion

A width of a second joining portion k1 of the metal reinforcing portion 600 (corresponding to the height of the metal reinforcing portion), as illustrated in Fig. 6, is within a range similar to that of the width j of the first joining portion 510, and may be different from the width j of the first joining portion 510. A thickness t4 of the metal reinforcing portion 600 can be within a range similar to that of a thickness t2 of the metal reinforcing portion 300.

Although the method for manufacturing the bumper reinforcement has been described as an example, the method for manufacturing the automobile structural material according to the present disclosure can be applied to manufacturing for other automobile structural materials such as outer panels and inner panels, for example, a hood, doors, a roof, and the like; door beams; side sills; a battery pack case; and B-pillars, in which the first metal member and the second metal member are joined to each other by using the solid joining agent.

### Examples

Examples, Comparative Examples, Test Examples, and Comparative Test Examples relating to the present invention will be described below, but the present invention is not limited thereto. In the following examples, the first metal member and the second metal member are collectively referred to as a joining base material.

### Joining Base Material

The following joining base materials were used.

### Steel Plate

A surface of a 440 MPa grade high-tensile cold-rolled steel sheet for automobile outer panel JFE-CA440 (available from JFE Steel Corporation, with a Young's modulus of 203 GPa) was subjected to a blast treatment to obtain a test piece having a width of 10 mm, a length of 45 mm, and a thickness of 2.3 mm.

### Aluminum Alloy

The surface of an aluminum alloy A6061-T6 (with a Young's modulus of 68.3 GPa) was blasted to obtain a test piece having a width of 10 mm, a length of 45 mm, and a thickness of 3 mm.

Weight Average Molecular Weights, Heats of Fusion, and Epoxy Equivalents of Thermoplastic Epoxy Resin and Phenoxy Resin

The weight average molecular weight, heat of fusion, and epoxy equivalent of each of the thermoplastic epoxy resin and the phenoxy resin were measured by the following procedures.

### Weight Average Molecular Weight

The thermoplastic epoxy resin and the phenoxy resin were each dissolved in tetrahydrofuran and measurement was performed using Prominence 501 (available from Showa Science Co., Ltd., Detector: Shodex (trade name) RI-501 (available from Showa Denko K.K.)) under the following conditions.
Column: LF-804 × 2 available from Showa Denko K.K.
Column temperature: 40°C
Sample: 0.4 mass% resin solution in tetrahydrofuran
Flow rate: 1 mL/min
Eluent: tetrahydrofuran
Calibration method: conversion in terms of standard polystyrene

### Heat of Fusion

The thermoplastic epoxy resin and the phenoxy resin were weighed from 2 to 10 mg, placed in an aluminum pan, and heated from 23°C to 200°C at 10°C/min using a DSC (DSC8231 available from Rigaku Corporation) to obtain a DSC curve. The heat of fusion was calculated from the area of an endothermic peak at the time of melting in the obtained DSC curve and the weighed value.

### Epoxy Equivalent

A measured value obtained in accordance with JIS K 7236:2001 was converted into a value based on a resin solid content. In a case of a simple mixture without reaction, it was calculated from the epoxy equivalent and content of each mixed component.

### Test Example 1

### Solid Joining Agent P-1

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methylethylketone were charged and heated to 100°C while stirring was being performed under a nitrogen gas atmosphere. After visually checking that they were dissolved, the mixture was cooled to 40°C to obtain a resin composition having a solid content of about 20 mass%. The solvent was removed from the resin composition, and the resin component was heated at 160°C for 2 hours to obtain a film-shaped solid joining agent (P-1) having a solid content of 100 mass% and a thickness of 100 µm. The weight average molecular weight was about 37000. The epoxy equivalent was the detection limit or more. No peak of heat of fusion was detected in the DSC.

### Joined Body

A joined body of an aluminum alloy (first metal member) and a steel plate (second metal member) listed in Table 1 was prepared. For open time evaluation, a joined body for open time evaluation was also prepared in a similar procedure except that a solid joining agent was placed on the first metal member and allowed to stand for 3 days, and then the second metal member was placed thereon.

The solid joining agent P-1 cut into a size of 10 × 15 mm was placed on the first metal member, and immediately thereafter, the second metal member was placed thereon. An overlap between these base materials was set to a width of 10 mm and a depth of 5 mm. The solid joining agent P-1 was arranged to cover the entire overlapping region between the base materials. In other words, the first metal member and the second metal member were not in direct contact with each other, and the solid joining agent was interposed therebetween to prepare an unjoined layered body. The metal was heated by high-frequency induction using a high-frequency induction welding machine (available from SEIDENSHA ELECTRONICS CO., LTD., Oscillator UH-2.5K, Press JIIP30S), and the test pieces were joined to each other by heating and pressurizing. A force for pressurizing was 110 N (a pressure of 2.2 MPa) and an oscillation frequency was 900 kHz. The oscillation time was 6 seconds.

### Test Example 2

### Solid Joining Agent P-2

Into a reactor equipped with a stirrer, a reflux condenser, a gas inlet tube, and a thermometer, 20 g of Enototo (trade name) YP-50S (available from NIPPON STEEL Chemical & Material CO., LTD., phenoxy resin, weight average molecular weight: about 50000) and 80 g of cyclohexanone were charged and heated to 60°C while being stirred, were visually checked to be dissolved, and were cooled to 40°C to obtain a resin composition having a solid content of 20 mass%. The solvent was removed from the resin composition to obtain a film-shaped solid joining agent (P-2) having a solid content of 100 mass% and a thickness of 100 µm. The weight average molecular weight was 50000, and the epoxy equivalent was the detection limit or more. No peak of heat of fusion was detected in the DSC.

### Joined Body

A joined body listed in Table 1 and a joined body for open time evaluation were prepared in a manner similar to that in Test Example 1 except that P-2 was used as the solid joining agent.

### Test Example 3

### Solid Joining Agent P-3

A solid joining agent (P-3) was obtained by mixing the resin composition P-2 and a crystalline epoxy resin YSLV-80XY (available from NIPPON STEEL Chemical & Material CO., LTD.) at a mass ratio of 98:2. The weight average molecular weight was 36000, the epoxy equivalent was 9600 g/eq, and the heat of fusion was 2 J/g.

### Joined Body

A joined body listed in Table 1 and a joined body for open time evaluation were prepared in a manner similar to that in Test Example 1 except that P-3 was used as the solid joining agent.

### Test Example 4

### Solid Joining Agent P-4

A solid joining agent (P-4) was obtained by mixing the resin composition P-2 and a crystalline epoxy resin YSLV-80XY (available from NIPPON STEEL Chemical & Material CO., LTD.) at a mass ratio of 94:6. The weight average molecular weight was 35000, the epoxy equivalent was 2100 g/eq, and the heat of fusion was 4 J/g.

### Joined Body

A joined body listed in Table 1 and a joined body for open time evaluation were prepared in a manner similar to that in Test Example 1 except that P-4 was used as the solid joining agent.

### Test Example 5

### Solid Joining Agent P-5

A solid joining agent (P-5) was obtained by mixing the resin composition P-2 and a crystalline epoxy resin YSLV-80XY (available from NIPPON STEEL Chemical & Material CO., LTD.) at a mass ratio of 89:11. The weight average molecular weight was 33000, the epoxy equivalent was 1745 g/eq, and the heat of fusion was 11 J/g.

### Joined Body

A joined body listed in Table 1 and a joined body for open time evaluation were prepared in a manner similar to that in Test Example 1 except that P-5 was used as the solid joining agent.

### Test Example 6

### Solid Joining Agent P-6

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, molecular weight: about 4060), 12.5 g (0.6 equivalent) of bisphenol S (molecular weight: 250), 2.4 g of triphenylphosphine, and 1000 g of methylethylketone were charged and heated to 100°C while being stirred under a nitrogen gas atmosphere. After visually checking that they were dissolved, the mixture was cooled to 40°C to obtain a resin composition having a solid content of about 20 mass%. The solvent was removed from the resin composition, and the resin component was heated at 160°C for 2 hours to obtain a film-shaped solid joining agent (P-6) having a solid content of 100 mass% and a thickness of 100 µm. The weight average molecular weight was about 30000, and the epoxy equivalent was the detection limit or more. No peak of heat of fusion was detected in the DSC.

### Joined Body

A joined body listed in Table 1 and a joined body for open time evaluation were prepared in a manner similar to that in Test Example 1 except that P-6 was used as the solid joining agent.

### Comparative Test Example 1

### Solid Joining Agent Q-1

Two liquids of a thermosetting liquid epoxy adhesive E-250 (available from KONISHI Co., Ltd., two-liquid type of bisphenol-type epoxy resin and amine curing agent) were mixed, applied to a release film, cured at 100°C for 1 hour, then cooled, and peeled off from the release film to obtain a 100 µm-thick film-shaped solid joining agent (Q-1). No peak of heat of fusion was detected in the DSC. The solid joining agent was insoluble in the solvent, and hence it was impossible to measure the epoxy equivalent and the weight average molecular weight.

### Joined Body

A joined body listed in Table 1 and a joined body for open time evaluation were prepared in a manner similar to that in Test Example 1 except that Q-1 was used as the solid joining agent.

### Comparative Test Example 2

### Solid Joining Agent Q-2

An amorphous polycarbonate film (Iupilon (trade name) FE2000, available from Mitsubishi Engineering-Plastics Corporation, 100 µm thick) was used as a solid joined body Q-2. No peak of heat of fusion was detected in the DSC.

### Joined Body

A joined body listed in Table 1 and a joined body for open time evaluation were prepared in a manner similar to Test Example 1 except that Q-2 was used as the solid joining agent.

### Comparative Test Example 3

### Solid Joining Agent Q-3

A crystalline epoxy resin YSLV-80XY (available from NIPPON STEEL Chemical & Material Co., Ltd.) was used as a solid joining agent (Q-3). The epoxy equivalent was 192 g/eq. The weight average molecular weight was 340. The heat of fusion was 70 J/g.

### Joined Body

A joined body listed in Table 1 and a joined body for open time evaluation were prepared in a manner similar to that in Test Example 1 except that Q-3 was used as the solid joining agent.

### Comparative Test Example 4

### Joined Body

Two liquids of a thermosetting liquid epoxy adhesive E-250 (available from KONISHI Co., Ltd., two-liquid type of bisphenol-type epoxy resin and amine curing agent) were mixed, applied to each of the same first metal member and second metal member as in Test Example 1, and bonded to each other within 1 minute. Thereafter, the bonded body was allowed to stand in an oven at 100°C for 1 hour in a state of being fixed with a clip to cure the adhesive component, and then cooled to room temperature to prepare the joined body listed in Table 1. A joined body for open time evaluation was also prepared in a manner similar to that described above except that the thermosetting liquid epoxy adhesive E-250 was applied to each of the first metal member and the second metal member, and then the first metal member and the second metal member were allowed to stand for 3 days and then bonded to each other.

### Comparative Test Example 5

Into a flask, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methylethylketone were charged, and stirred at normal temperature to obtain a liquid resin composition having a solid content of about 20 mass%. The liquid resin composition was applied onto the second metal member similar to that in Test Example 1 by bar coating, dried at room temperature for 30 minutes, and then allowed to stand in an oven at 160°C for 2 hours to form a solid coating layer of a thermoplastic epoxy resin polymer having a thickness of 100 µm on the surface of the second metal member. The weight average molecular weight of the coating layer was about 40000. The epoxy equivalent was the detection limit or more. No peak of heat of fusion was detected in the DSC.

### Joined Body

A joined body listed in Table 1 was prepared in a manner similar to that in Test Example 1 except that the first metal member was directly placed on the second metal member including the coating layer. For open time evaluation, a joined body for open time evaluation was also prepared in a manner similar to that described above except that a coating layer of a thermoplastic epoxy resin polymer was formed on the surface of the second metal member, then allowed to stand for 3 days, and then layered with the first metal member.

### Comparative Test Example 6

Into a reactor equipped with a stirrer, a reflux condenser, a gas inlet tube, and a thermometer, 20 g of Phenotote (trade name) YP-50S (available from NIPPON STEEL Chemical & Material Co., Ltd., phenoxy resin, weight average molecular weight: about 50000) and 80 g of cyclohexanone were charged, heated to 60°C while being stirred, visually checked to be dissolved, and cooled to 40°C to obtain a liquid resin composition having a solid content of 20 mass%. The liquid resin composition was applied onto the second metal member similar to that in Test Example 1 by bar coating, and was allowed to stand in an oven at 70°C for 30 minutes to form a phenoxy resin coating layer having a thickness of 100 µm on the surface of the second metal member. The weight average molecular weight of the coating layer was about 50000. The epoxy equivalent was the detection limit or more. No peak of heat of fusion was detected in the DSC.

### Joined Body

A joined body listed in Table 1 was prepared in a manner similar to that in Test Example 1 except that the first metal member was directly placed on the second metal member having the phenoxy resin coating layer. For open time evaluation, a joined body for open time evaluation was also prepared in a manner similar to that described above except that the phenoxy resin coating layer was formed on the surface of the second metal member, then allowed to stand for 3 days, and then layered with the first metal member.

### Comparative Test Example 7

### Joined Body

A joined body listed in Table 1 and a joined body for open time evaluation were prepared in a manner similar to that in Test Example 1 except that a crystalline polyamide-based hot melt adhesive film NT-120 (available from Nihon Matai Co., Ltd., thickness: 100 µm) was used as the solid joining agent. The heat of fusion was 60 J/g.

### Shear Adhesive Force

The joined bodies obtained in Test Examples 1 to 6 and Comparative Test Examples 1 to 7 were allowed to stand at a measurement temperature (23°C or 80°C) for 30 minutes or longer, and then subjected to a tensile shear adhesive strength test in an atmosphere of 23°C and 80°C in accordance with ISO19095 using a tensile tester (universal tester autograph "AG-X plus" (available from Shimadzu Corporation); load cell: 10 kN, tensile speed: 10 mm/min) to measure joining strength. The measurement results are listed in Table 1.

### Joining Process Time

The joining process time was measured as follows. The time from a start point to an end point was measured with the time when the joining agent first came into contact with one or both of the base materials constituting the joined body as the start point and the time when the preparation of the joined body was completed as the end point. As for heating and pressurizing times, the heating and pressurizing times of the joined bodies listed in Table 1 were averaged.

### Recyclability

The joined body listed in Table 1 was placed on a hotplate at 200°C and heated for 1 minute, and then recyclability was judged on the basis of whether the joined body could be easily peeled off with a force of 1 N or less. Recyclability was evaluated as good (PASS) when all the joined bodies could be peeled off, and was evaluated as poor (FAIL) when one or some joined bodies could not be peeled off.

### Repairability

After the tensile shear strength test at 23°C, among the test pieces of an aluminum alloy and a steel material whose joint surfaces were fractured (the layer of the joined solid remaining on the surface of the first metal member or the second metal member, or the surfaces of both of them), the first metal member was placed on the second metal member and a joined body was prepared in a manner similar to that in Test Example 1 to obtain a repair joined body. The shear adhesive force of the repair joined body at 23°C was measured in a manner similar to that in the test method described above. When the shear adhesive force was 80% or more of the first shear adhesive force, repairability was evaluated as good (PASS), and when the shear adhesive force was less than 80%, repairability was evaluated as unsuitable (FAIL).

### Open Time Evaluation

The joined body for open time evaluation was used for performing the tensile shear adhesive strength test at 23°C. As compared with the test pieces prepared by the method of Test Examples and Comparative Test Examples, when the shear adhesive force was 80% or more, open time evaluation was determined as good (PASS), and when the shear adhesive force was less than 80%, it was determined to be unsuitable (FAIL). The open time evaluation being good (PASS) means that the open time is long and convenience is excellent.

**[Table 1-1]**

| Table 1 | | | | | | | | |
|---|---|---|---|---|---|---|---|---|
| | | | Test Example 1 | Test Example 2 | Test Example 3 | Test Example 4 | Test Example 5 | Test Example 6 |
| Properties of joining agent | | Form of joining agent | Film | Film | Film | Film | Film | Film |
| | | Resin main component | Thermoplastic epoxy resin | Phenoxy resin | Thermoplastic epoxy resin | Thermoplastic epoxy resin | Thermoplastic epoxy resin | Thermoplastic epoxy resin |
| | | Weight average molecular weight | 37000 | 50000 | 36000 | 35000 | 33000 | 30000 |
| | | Heat of fusion [J/g] | Fusion peak None | Fusion peak None | 2 | 4 | 11 | Fusion peak None |
| | | Epoxy equivalent [g/eq] | Detection limit or more | Detection limit or more | 9600 | 2100 | 1745 | Detection limit or more |
| Adhesive force | 23°C Shear adhesive force [MPa] | Aluminum alloy (first metal member)/steel plate (second metal member) | 22 | 22 | 22 | 19 | 21 | 17 |
| | 80°C Shear adhesive force [MPa] | Aluminum alloy (first metal member)/steel plate (second metal member) | 11 | 12 | 15 | 13 | 13 | 11 |
| Convenience | Joining process time | | 3.5 seconds | 3.5 seconds | 3.5 seconds | 3.5 seconds | 3.5 seconds | 3.5 seconds |
| | Recyclability | | PASS | PASS | PASS | PASS | PASS | PASS |
| | Repairability | | PASS | PASS | PASS | PASS | PASS | PASS |
| | Open time evaluation | | PASS | PASS | PASS | PASS | PASS | PASS |

**[Table 1-2]**

| (Continuation of Table 1) | | | | | | | | | |
|---|---|---|---|---|---|---|---|---|---|
| | | | Comparative Test Example 1 | Comparative Test Example 2 | Comparative Test Example 3 | Comparative Test Example 4 | Comparative Test Example 5 | Comparative Test Example 6 | Comparative Test Example 7 |
| Properties of joining agent | | Form of joining agent | Film | Film | Film | Liquid | Coating layer | Coating layer | Film |
| | | Resin main component | Thermosetting epoxy resin | Polycarbonate | Epoxy resin | Thermosetting epoxy resin | Thermosetting epoxy resin | Phenoxy resin | Polyamide |
| | | Weight average molecular weight | - | - | 340 | - | 40,000 | 50000 | - |
| | | Heat of fusion [J/g] | Fusion peak None | Fusion peak None | 70 | Fusion peak None | Fusion peak None | Fusion peak None | 60 |
| | | Epoxy equivalent [g/eq] | - | - | 192 | - | Detection limit or more | Detection limit or more | - |
| Adhesive force | 23°C Shear adhesive force [MPa] | Aluminum alloy (first metal member)/steel plate (second metal member) | 0 | 6 | 11 | 20 | 20 | 8 | 15 |
| | 80°C Shear adhesive force [MPa] | Aluminum alloy (first metal member)/steel plate (second metal member) | 0 | 6 | 7 | 14 | 14 | 5 | 4 |
| Convenience | Joining process time | | 3.5 seconds | 3.5 seconds | 3.5 seconds | 70 minutes | 150 minutes | 32 **minutes** | 3.5 seconds |
| | Recyclability | | FAIL | PASS | PASS | PASS | PASS | PASS | PASS |
| | Repairability | | FAIL | PASS | PASS | FAIL | PASS | PASS | PASS |
| | Open time evaluation | | FAIL | PASS | PASS | FAIL | PASS | PASS | PASS |

### Example 1

### Main Body

A billet of an aluminum alloy A6061-T6 (with a Young's modulus of 68.3 GPa) was hot-extruded to manufacture an extruded profile having a W-hat open cross-sectional shape as illustrated in Fig. 5, water-quenched immediately after being extruded, artificially aged (200°C × 6 hours), and then cut to a length of 400 mm to prepare a main body. Here, as illustrated in Fig. 5, widths a1 and a2 of the first joining portion were 23.8 mm, the height b1 of the upper surface and the height b2 of the lower surface were 23 mm, the height c of the front surface portion was 110 mm, the depth d1 of the upper portion and the depth d2 of the lower portion were 60 mm, the depth e1 from the upper surface to the central recessed portion and the depth e2 from the lower surface to the central recessed portion were 15 mm, and the thickness t1 was 2.5 mm. A change in Young's modulus of the aluminum alloy A6061-T6 caused when the billet was processed into the main body was 3% or less.

### Metal Reinforcing Portion

A 440 MPa grade high-tensile cold-rolled steel sheet JFE-CA440 for automobile outer panel (available from JFE Steel Corporation, with a Young's modulus of 203 GPa) was used, and a strip material slit to a width of 157.6 mm was cut with a shear to prepare a metal reinforcing portion having a length of 400 mm. The width of the metal reinforcing portion was 157.6 mm, which was equal to the width of the main body, the width of the second joining portion was 23.8 mm, which was equal to the widths a1 and a2 of the first joining portion, and the thickness t2 was 0.8 mm.

The main body and the metal reinforcing portion were bonded to each other, in a state where the main body served as the first metal member and the metal reinforcing portion served as the second metal member, by placing the solid joining agent described in Test Example 1, which was formed to have a thickness of 200 µm, in contact with the entire surfaces of the first joining portion and the second joining portion (each of which has an area of 23.8 mm × 400 mm), uniformly fixing the main body and the metal reinforcing portion with a binder clip, and placing them in an oven at an ambient temperature of 200°C for 30 minutes. In this way, the test sample of the bumper reinforcement including the main body and the metal reinforcing portion was prepared.

### Example 2

### Main Body

The main body of Example 1 was used.

### Metal Reinforcing Portion

A 440 MPa grade high-tensile cold-rolled steel sheet JFE-CA440 for automobile outer panel (available from JFE Steel Corporation, with a Young's modulus of 203 GPa) was used, and a strip material slit to a width of 157.6 mm was cut with a shear to prepare a metal reinforcing portion having a length of 400 mm. The width of the metal reinforcing portion was 157.6 mm, which was equal to the width of the main body, the width of the second joining portion was 23.8 mm, which was equal to the widths a1 and a2 of the first joining portion, and the thickness t2 was 0.5 mm.

The main body and the metal reinforcing portion were joined in a manner similar to that in Example 1 to prepare a test sample of the bumper reinforcement including the main body and the metal reinforcing portion.

### Example 3

A test sample of a bumper reinforcement including a main body and a metal reinforcing portion was prepared in a manner similar to that in Example 1 except that joining between the main body and the metal reinforcing portion was performed by using the solid joining agent described in Test Example 2 and the procedure described in Test Example 2 in a state where the main body served as the first metal member and the metal reinforcing portion served as the second metal member.

### Example 4

A test sample of a bumper reinforcement including a main body and a metal reinforcing portion was prepared in a manner similar to that in Example 1 except that joining between the main body and the metal reinforcing portion was performed by using the solid joining agent described in Test Example 3 and the procedure described in Test Example 3 in a state where the main body served as the first metal member and the metal reinforcing portion served as the second metal member.

### Example 5

A test sample of a bumper reinforcement including a main body and a metal reinforcing portion was prepared in a manner similar to that in Example 1 except that joining between the main body and the metal reinforcing portion was performed by using the solid joining agent described in Test Example 4 and the procedure described in Test Example 4 in a state where the main body served as the first metal member and the metal reinforcing portion served as the second metal member.

### Example 6

A test sample of a bumper reinforcement including a main body and a metal reinforcing portion was prepared in a manner similar to that in Example 1 except that joining between the main body and the metal reinforcing portion was performed by using the solid joining agent described in Test Example 5 and the procedure described in Test Example 5 in a state where the main body served as the first metal member and the metal reinforcing portion served as the second metal member.

### Example 7

A test sample of a bumper reinforcement including a main body and a metal reinforcing portion was prepared in a manner similar to that in Example 1 except that joining between the main body and the metal reinforcing portion was performed by using the solid joining agent described in Test Example 6 and the procedure described in Test Example 6 in a state where the main body served as the first metal member and the metal reinforcing portion served as the second metal member.

### Comparative Example 1

The main body of Example 1 was used as a test sample of Comparative Example 1.

### Comparative Example 2

The main body and the metal reinforcing portion were joined to each other by using a friction stir joining machine and a carbide stirrer (Φ 4 mm × T 2.5 mm) under the conditions of 1500 rpm and a feeding speed of 400 mm/min, and by friction stir joining of a butted portion of the first joining portion and the second joining portion in the longitudinal direction from the main body side, in a state where the main body served as the first metal member and the metal reinforcing portion served as the second metal member. In this way, the test sample of the bumper reinforcement including the main body and the metal reinforcing portion was prepared.

### Comparative Example 3

The main body and the metal reinforcing portion were joined to each other by screw fastening (at four positions) using a washer subjected to an anticorrosion treatment, in a state where the main body served as the first metal member and the metal reinforcing portion served as the second metal member. In this way, the test sample of the bumper reinforcement including the main body and the metal reinforcing portion was prepared.

### Evaluations

The following evaluations were performed on each test sample. The results are summarized in Table 2.

### Evaluation of Weight Reduction

As an index of weight reduction, a mass per unit length (g/m) of each test sample was determined. The density of an aluminum alloy (A6061 alloy) constituting the main body is 2.70 g/cm³, and the density of iron constituting the metal reinforcing portion is 7.87 g/cm³. When the mass per unit length was less than 2.5 kg/m, weight reduction was evaluated as "excellent", when the mass per unit length was equal to or more than 2.5 kg/m and less than 2.7 kg/m, weight reduction was evaluated as "good", and when the mass per unit length was equal to or more than 2.7 kg/m, weight reduction was evaluated as "poor".

### Evaluation of Plastic Deformability: Three-Point Bending Compression Test

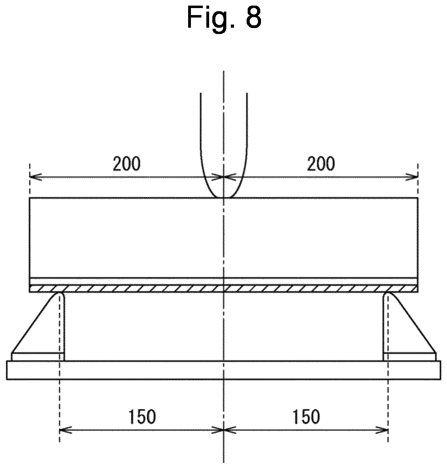

A test was carried out by using a three-point bending compression tester configured as illustrated in Fig. 8. Specifically, the test sample was placed in the tester such that the main body was positioned on the upper side, and an indenter positioned above was positioned at the center of the test sample. Then, a load of 5 t or more was applied to the test sample through the indenter at a displacement rate of 1 mm/min in an atmosphere of 25°C. Based on the obtained data, a graph of a load-displacement curve with displacement (mm) on the x-axis and load (t) on the y-axis was created. From this graph, the slope of the initial linear region (between 1 t and 2 t) was determined, a parallel line based on the slope was shifted to the right side, and a displacement amount (residual displacement amount) was determined from the intersection of the x-axis and the parallel line when the load-displacement curve under the load of 5 t and the parallel line intersect with each other. Then, a residual strain amount (%) was calculated from the displacement amount based on the following Equation 1. A case where the residual strain amount is 0.20% or more and less than 0.50% can be evaluated as "good", and a case where the residual strain amount is 0.50% or more can be evaluated as "poor". Residual strain amount (%) = (6 × thickness of test sample × displacement amount)/(inter- fulcrum distance)2

In Equation 1, the inter-fulcrum distance is 300 mm.

### Evaluation of Electrolytic Corrosion Resistance (Insulating Property)

Regarding the electrolytic corrosion resistance, an insulation resistance value between the aluminum alloy (first metal member) and the steel plate (second metal member) after joining was measured by using a battery-type insulation resistance meter (MODEL3301, available from KYORITSU ELECTRICAL INSTRUMENTS WORKS, LTD.), and a case where the insulation resistance value was 5 MQ or more at an output voltage of 500 V was determined to be acceptable.

**[Table 2-1]**

| Table 2 | | | | | | | |
|---|---|---|---|---|---|---|---|
| | Example 1 | Example 2 | Example 3 | Example 4 | Example 5 | Example 6 | Example 7 |
| Type of main body member | W-hat type | W-hat type | W-hat type | W-hat type | W-hat type | W-hat type | W-hat type |
| Thickness of main body member (mm) | 2.5 | 2.5 | 2.5 | 2.5 | 2.5 | 2.5 | 2.5 |
| Thickness of metal reinforcing portion (mm) | 0.8 | 0.5 | 0.8 | 0.8 | 0.8 | 0.8 | 0.8 |
| Solid joining agent | 1 | 1 | 2 | 3 | 4 | 5 | 6 |
| Weight per unit length (kg/m) | 2.6 (Good) | 2.3 (Excellent) | 2.6 (Good) | 2.6 (Good) | 2.6 (Good) | 2.6 (Good) | 2.6 (Good) |
| Residual strain (%) | **0.40** (Good) | 0.42 (Good) | 0.40 (Good) | 0.41 (Good) | 0.39 (Good) | 0.39 (Good) | 0.43 (Good) |
| Electrolytic corrosion resistance (insulating property) | Good | Good | Good | Good | Good | Good | Good |

**[Table 2-2]**

| (Continuation of Table 2) | | | |
|---|---|---|---|
| | Comparative Example 1 | Comparative Example 2 | Comparative Example 3 |
| Type of main body member | W-hat type | W-hat type | W-hat type |
| Thickness of main body member (mm) | 2.5 | 2.5 | 2.5 |
| Thickness of metal reinforcing portion (mm) | - | 0.8 | 0.8 |
| Solid joining agent | - | (Friction stir joining) | (Anticorrosion treatment screw fastening) |
| Weight per unit length (kg/m) | 1.8 (Excellent) | 2.6 (Good) | 2.65 (Good) |
| Residual strain (%) | 0.56 (Poor) | 0.38 (Good) | 0.56 (Poor) |
| Electrolytic corrosion resistance (insulating property) | Good | Poor | Good |

### Results

As can be seen from Table 2, it was confirmed that the configurations of Example 1 to Example 7 are excellent in balance between rigidity and plastic deformability while being lightweight, and that also has excellent electrolytic corrosion resistance.

According to the present disclosure, it is possible to manufacture an automobile structural material, in particular, a bumper reinforcement in which the main body and the metal reinforcing portion are firmly joined to each other, that is lightweight and excellent in balance between rigidity and plastic deformability, and that also has excellent electrolytic corrosion resistance, in a short joining process time and a long open time.

### Industrial Applicability

The method for manufacturing the automobile structural material according to the present disclosure is applicable to a method for manufacturing an automobile structural material, in particular, a bumper reinforcement constituting a skeleton of a bumper structure of an automobile.

### Reference Signs List

2: First metal member
3: Adhesive layer
5: Second metal member
10: Bumper fascia
20: Energy absorber
30: Bumper reinforcement
32: Elongated hole
34: Positioning hole
36: Bolt
40: Crash box
42: Round hole
46: Nut
50: Vehicle body fixing member
100: Bumper structure
200: Main body
202: Bent portion
210: Lower first joining portion
220: Upper first joining portion
230: Lower portion
240: Upper portion
250: Front surface portion
252: Central recessed portion
254: Lower surface
256: Upper surface
260: Hollow portion
270: Elongated hole
272: Positioning hole
300: Metal reinforcing portion
302: Bent portion
304: Reinforcing portion main body
310: Lower second joining portion
320: Upper second joining portion
370: Elongated hole
372: Positioning hole
350: Lightening hole
400: Bumper reinforcement
500: Main Body
510: First joining portion
520: Middle portion
530: Lower portion
540: Upper portion
550: Front surface portion
560: Hollow portion
600: Metal reinforcing portion
602: Reinforcing portion main body
610: Second joining portion
a1: Width of upper first joining portion
a2: Width of lower first joining portion
b1: Height of upper surface
b2: Height of lower surface
c: Height of front surface portion
d1: Depth of upper portion
d2: Depth of lower portion
e1: Depth from upper surface to central recessed portion
e2: Depth from lower surface to central recessed portion
h1: Width of upper second joining portion
h2: Width of lower second joining portion
i1: Height of front surface portion
i2: Depth of main body
i3: Height of hollow
j: Width of first joining portion
k1: Width of second joining portion
t1: Thickness of main body
t2: Thickness of metal reinforcing portion
t3: Thickness of main body
t4: Thickness of metal reinforcing portion
α1: Angle formed by upper portion and upper first joining portion
α2: Angle formed by lower portion and lower first joining portion
β1: Angle formed by upper surface and upper portion
β2: Angle formed by lower surface and lower portion

## Claims

1. A method for manufacturing an automobile structural material, the method comprising:
a pre-joining process of preparing a layered body in a state in which a first metal member, a solid joining agent containing, as a main component, an amorphous thermoplastic resin that is at least one selected from the group consisting of thermoplastic epoxy resins and phenoxy resins,
and a second metal member to be joined to the first metal member are arranged in this order; and a joining process of heating and pressurizing the layered body, melting the solid joining agent, thereby joining the first metal member and the second metal member,
wherein a Young's modulus of the second metal member is higher than a Young's modulus of the first metal member by a value equal to or more than 5 GPa.

2. The method for manufacturing the automobile structural material, according to claim 1, wherein an epoxy equivalent of the amorphous thermoplastic resin is equal to or more than 1600, or the amorphous thermoplastic resin does not contain an epoxy group, and a heat of fusion of the amorphous thermoplastic resin is equal to or less than 15 J/g.

3. The method for manufacturing the automobile structural material, according to claim 1 or 2, wherein the heating and the pressurizing are performed under conditions of 100°C to 400°C and 0.01 MPa to 20 MPa.

4. The method for manufacturing the automobile structural material, according to claim 1 or 2, wherein the solid joining agent before the melting has a shape selected from the group consisting of a film, a rod, a pellet, and powder.

5. The method for manufacturing the automobile structural material, according to claim 1 or 2, wherein
the automobile structural material is a bumper reinforcement,
the first metal member is a main body extending along a vehicle width direction and including at least one first joining portion,
the second metal member is a metal reinforcing portion extending along the vehicle width direction and including at least one second joining portion, and
the first joining portion of the main body and the second joining portion of the metal reinforcing portion are joined to each other through the solid joining agent.

6. The method for manufacturing the automobile structural material, according to claim 5, wherein the metal reinforcing portion is disposed closer to a vehicle body side relative to the main body.

7. The method for manufacturing the automobile structural material, according to claim 5, wherein the main body has an open cross section, and
the first joining portion of the main body and the second joining portion of the metal reinforcing portion are joined to each other and thus form a hollow portion inside the main body.

8. The method for manufacturing the automobile structural material, according to claim 5, wherein a cross-sectional shape of the main body is a hat form.

9. The method for manufacturing the automobile structural material, according to claim 5, wherein the metal reinforcing portion includes one or more holes.

10. The method for manufacturing the automobile structural material, according to claim 5, wherein a material of the main body is an aluminum alloy having a tensile strength of 350 MPa or more.

11. The method for manufacturing the automobile structural material, according to claim 5, wherein a material of the metal reinforcing portion is a metal material selected from the group consisting of iron, steel, an Al-Si-based aluminum alloy, and an Al-Zn-based aluminum alloy.

12. The method for manufacturing the automobile structural material, according to claim 5, wherein the main body includes the first joining portion on each of upper and lower sides of the main body,
the metal reinforcing portion includes
a reinforcing portion main body extending in the vehicle width direction, and
the second joining portion on each of upper and lower sides of the reinforcing portion main body, and
the first joining portion and the second joining portion are joined to each other at a joint surface that intersects a vehicle front-rear direction.
